# EUROPEAN PATENT SPECIFICATION

(11) **EP 1 492 281 B1**
(45) Date of publication and mention of the grant of the patent: **03.08.2011**
(21) Application number: 04014937.9
(22) Date of filing: 25.06.2004
(51) Int. Cl.: H04W 88/02

(54) **Data flow control system, method and program**
System, Verfahren und Programm zur Datenflusskontrolle
Système, procédé et programme de contrôle de flux de données

(30) Priority: 26.06.2003 JP 2003183253
(43) Date of publication of application: 29.12.2004
(73) Proprietor: NEC Corporation, Minato-ku Tokyo 108-8001 (JP)
(72) Inventor: Oda, Toshiyuki, Minato-ku, Tokyo (JP)
(74) Representative: Glawe, Delfs, Moll

(56) References cited:
- EP-A- 1 249 972
- US-A- 5 802 310
- US-A1- 2002 160 784
- US-B1- 6 425 091

## Description

### BACKGROUND OF THE INVENTION

The present invention relates to data flow control system, method and program and, more particularly, to data control system, method and program, which seek buffer capacity optimization in data flow control performed in a portable terminal used in the transmission of data from an external device to a radio network.

Heretofore, a system for data flow control for buffer capacity optimization is disclosed in, for instance, Japanese Patent Laid-Open No. 2000-187567. In this literature, it is described that it is possible to prevent the buffer from getting short of capacity for taking in print data from a spool file, without provision of any additional RAM as buffer but by securing an additional buffer capacity in a RAM or hard disc, more specifically by checking, after data has been taken in a personal computer, whether the buffer capacity has been fully used up, then checking, in the case of absence of any vacant buffer capacity, whether the RAM or hard disc has any vacant capacity, and, in the case of presence of vacant capacity, stopping the data take-in and securing an additional buffer capacity in the RAM or hard disc.

However, in the case of a system using a mobile communication device as radio terminal for the transfer of data from an external device (for instance personal computer) to a ratio network just like file transfer, the method according to the above Japanese Patent Laid-Open No. 2000-187567, necessitates checking whether or not the data take-in buffer has been fully used up, checking, in the fully used-up case, whether a RAM or head disc has any vacant capacity, and in the case of presence of a vacant capacity, stopping the data take-in. Therefore, a problem of data throughput reduction is posed.

Also, in the method according to the above Japanese Patent Laid-Open No. 2000-187567, when a predetermined buffer that is used is fully used up, a RAM or head disc present as vacant capacity is added as buffer. Therefore, with a bad propagation environment of a radio network as the output side of the buffer, full use-up of buffer is highly possible. In this case, a delay time is involved from the instant when the transfer environment turns to be deteriorated until a control signal is transmitted to the external device. During this time, the buffer may undergo overflow, thus resulting in data loss. For preventing the data loss, it is conceivable to increase the buffer capacity. Doing so, however, is disadvantageous from the standpoint of the size reduction of such device as a portable terminal.

EP-A-1 249 972 discloses a data flow control system according to the preamble of claim 1. This system comprises a queue buffer which is connected to a link and arranged to queue data units that are to be sent over the link in a queue. A length parameter related to the length of the queue is determined and compared with a length threshold value, wherein a congestion notification is issued if the length parameter is equal or greater than the length threshold value. Furthermore, the length threshold value is automatically adapted on the basis of one or more characteristics of the link. In addition, upper and lower length threshold values may be used.

A similar system is known from US-A-5,802,310.

### SUMMARY OF THE INVENTION

In view of the above problems, it is an object of the present invention to prevent data loss without preparation of any wasteful memory space but by predicting data stagnation in the buffer before data is about to be stagnant.

In view of the above problems, it is another object of the present invention to obtain throughput improvement by reducing the frequency of transmission correction due to insufficient buffer capacity.

These objects are achieved by a data flow control system according to claim 1, a data flow control method according to claim 16 and a data flow control program of a mover according to claim 31; the dependent claims are related to further developments of the invention.

### BRIEF DESCRIPTION OF THE DRAWINGS

Fig. 1 is a block diagram showing the arrangement of an embodiment of the system according to the present invention;
Fig. 2 is a view showing the configuration of a buffer use status managing table allotted to a table shown in Fig. 1;
Fig. 3 is a view showing the configuration of a radio control parameter rating table allotted to the table shown in Fig. 1;
Fig. 4 is a view showing the configuration of a processor (CPU) load rating table allotted to the table shown in Fig. 1;
Fig. 5 is a view showing the configuration of a buffer rating table allotted to the table shown in Fig. 1;
Figs. 6(a) to 6(c) are views showing images of the buffer capacity control in the embodiment of the present invention;
Fig. 7 is a flow chart showing the summary of data control operation of the entire mover shown in Fig. 1;
Fig. 8 is a flow chart showing the operation of a buffer managing unit in response to a report from a buffer monitoring unit shown in Fig. 1;
Fig. 9 is a flow chart showing the operation of the buffer managing unit in response to a report from a communication data monitoring unit shown in Fig. 1;
Fig. 10 is a flow chart showing the operation of the buffer managing unit shown in Fig. 1 at the start of a program with load;
Fig. 11 is a flow chart showing the operation of the buffer managing unit shown in Fig. 1 at the end of the program with load;
Fig. 12 is a flow chart showing the operation of the buffer monitoring unit shown in Fig. 1 in the use of buffer (i.e., transmission and reception of data);
Fig. 13 is a flow chart showing the operation of the communication data monitoring unit in response to a timer interruption;
Fig. 14 is a flow chart showing the operation of the communication data monitoring unit at the time of block error occurrence;
Fig. 15 is a view for describing the case of using power control data;
Fig. 16 is a view for describing a method of control based on the number of communication base stations;
Fig. 17 is a view for describing a method of control of buffer allotting in a user memory; and
Fig. 18 is a view showing the state of mover at the time of inter-frequency hand-over occurrence.

### PREFERRED EMBODIMENTS OF THE INVENTION

Preferred embodiments of the present invention will now be described with reference to the drawings.

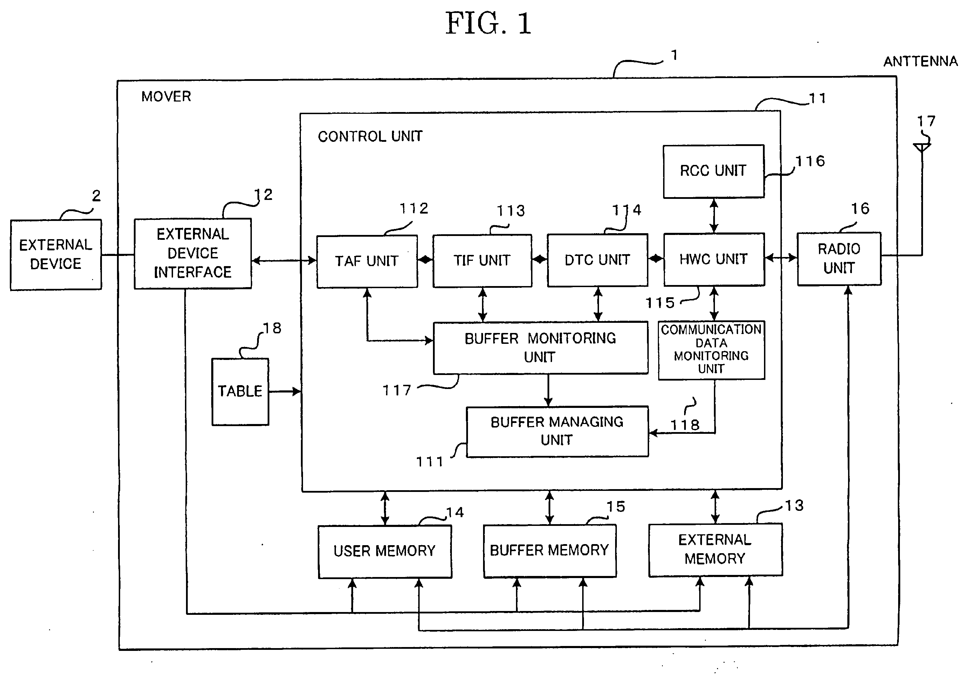

Referring to Fig. 1, the system comprises a mover 1, which is a portable terminal such as a portable telephone set, a PHS and a PDC operable under program control by a CPU (central processing unit), and an external device 2 connected to the mover 1 and serving to transmit data via the mover 1. In this case, the mover 1 may be a portable personal computer having a portable telephone set functions as well.

The mover 1 shown in Fig. 1 comprises an external device interface unit 12 which controls data input to and output from the external device 2, a control unit 11 operable under program control by a CPU (not shown), a radio unit 16, which exchanges data with the radio network via an antenna 17 for modulating transmission data to a radio frequency signal or extracting the reception data from the radio frequency signal, the antenna 17, which is connected to the radio unit 16 for radio communication with a base station (not shown) connected to the radio network, a user memory 14, which is allotted as use area of the user in a volatile memory (not shown, for instance flash memory), a buffer memory 15, which is allotted as buffer in a volatile memory (not shown, for instance RAM), an external memory 13, which is a non-volatile memory (for instance flash memory) mounted via a connector as use area for additionally provided applications and/or use area of the user, a table 18, which is allotted to a volatile memory (not shown) (or possibly allotted to, for instance, a RAM, same as the buffer memory 15). The radio communication in this case is assumed to be of a CDMA system including (W-CDMA). CDMA is an abbreviation of "code division multiple access".

The internal arrangement of the control unit 1 shown in Fig. 1 is shown as its function block in the case of its execution of a program stored in a memory unit (not shown, for instance RAM or flash memory), and it comprises a TAF (terminal adaptation function) unit 112 (not shown) for performing various communication services, a TIF (terminal interface function) unit 113 for executing a message process, a DTC (data transmission control) unit 114 for executing data communication control, an HWC (hardware control) unit 115 for executing control of the transmission and reception of radio signals, an RCC (radio & call control) unit 116 for executing radio line control and call control of the mover, a buffer monitoring unit 117 for monitoring the state of buffer in each block, a communication data monitoring unit 118 operative in message exchange with the radio network to take in power control data, active/monitor data, cell selection data, frequency hand-over data from the radio unit 16 via the HWC unit 115 and control these taken-in data, a buffer managing unit 111 for managing data buffer (which may sometimes be referred to merely as buffer in the following description).

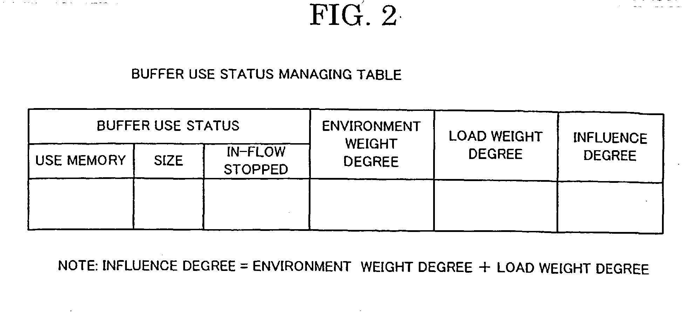

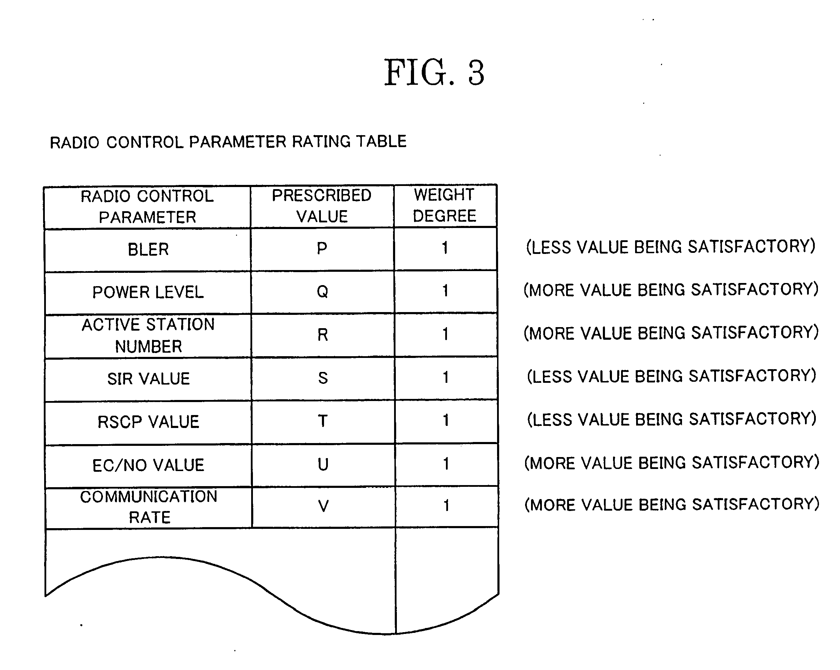

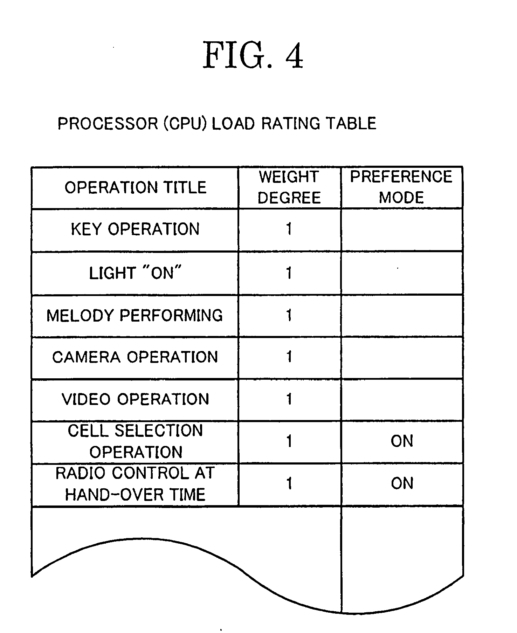

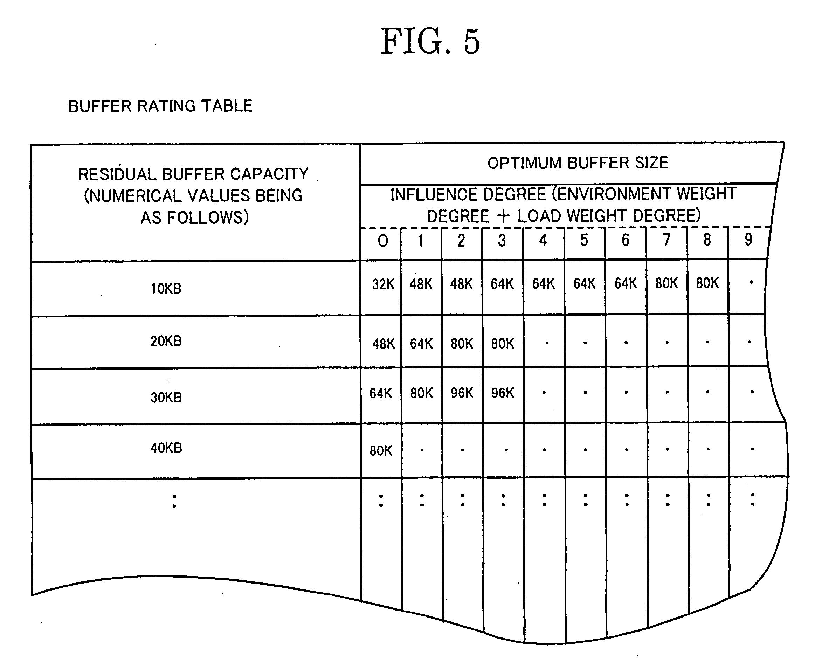

The table 18 shown in Fig. 1 is allotted to a buffer use status managing table as shown in Fig. 2, a radio control parameter rating table as shown in Fig. 3, a processor (CPU) load rating table as shown in Fig. 4, and a buffer rating table as shown in Fig. 5.

Fig. 2 shows a configuration example of the buffer use status managing table used in the embodiment. The buffer use status managing table is used by the buffer managing unit 111 for managing the buffer at the time of data transfer (for instance file transfer) from the external unit 2 to the radio network. The buffer use status managing table is constituted by a buffer use status area showing the prevailing status of use of the buffer in each memory (i.e., buffer memory 15, user memory 14 and external memory 13), an environment weight area showing the status of environment (i.e., degree of badness of environment, being the higher the higher the value), a loadweight area showing the status of the load (i.e., degree of load, being the higher the higher the value), and an influence degree area (the environment weight degree plus load weight degree being automatically calculated in the control unit 11). The buffer use status area is constituted by a use memory area showing the use memory and address (i.e., address range used as buffer), a size area showing the buffer size (i.e., buffer capacity) used as buffer, and an in-flow stop state area for issuing, to the external device 2, a stop command indicative of in-flow stop state in the buffer (for instance "ON" showing the in-flow stop state). As for the use memory and size areas in the buffer use status area, at the time of the start of data transfer, the buffer managing unit 111 sets preliminarily set data in the buffer memory 15 (set in a non-volatile memory (not shown), for instance, and containing start address, end address and use size), and after the end of the data transfer it clears the data.

Fig. 3 shows a configuration example of the radio control parameter rating table used in the embodiment. In this radio control parameter rating table, a rating value showing a value for judging the badness of the environment and a weight degree showing the extent (or degree) of the environment badness, being the higher the higher the value of the weight), are set for each radio control parameter as communication control data. The rating values and weight degrees are initialized when the system is established, and produced when power supply is turned on. The rating values and weight degrees can be updated even during the system operation by a system manager or the like froman input unit (not shown, for instance a keyboard). Examples of the radio control parameter as shown in Fig. 3, are BLER (block error rate, i.e., rate of errors in block unit), level of transmitted power, number of base stations of communication (number of base stations capable of performing communication with base stations, i.e., number of active stations), SIR (serial interface ratio, i.e., ratio of desired wave reception power to interference signal power) value, RSCP (received signal code power, i.e. desired wave reception power for evaluating the radio wave intensity) value, Ec/No (rate of reception signal power to noise power, per chip) value, and communication rate (i.e., common channel or communication rate selected among 32, 64 and 384 k). The chip is a unit of rate of transmission of dispersion code, and dispersion code of W-CDMA is transferred at a rate (i.e., chip rate) of 3.84 Mchip/sec. One chip length is thus 0.26 µ sec.

Fig. 4 shows a configuration example of the processor (CPU) load rating table in the embodiment. The processor (CPU) load rating table is constituted by a weight area showing the degree of load (the degree being the higher the higher the value) and a preference made area showing whether the buffer capacity control is to be done immediately (i.e., in preference, "ON" representing the preference for instance) for each operation title of program of the processor operation. The weight degrees and preference modes are initialized at the time of system organization and produced when power supply is turned on. It is possible, even during system operation, that a system manager or the like updates the weight degrees and preference modes from an input unit (not shown, a keyboard for instance).

Referring to Fig. 5, the buffer rating table is one, in which accurate buffer sizes each with respect to the influence value as the sum of the environment weight degree and the load weight degree are set for each of the sizes of stagnation in the buffer (which is called residual buffer capacity according to the present invention), that is, rated values for checking whether the buffer capacity (i.e. buffer size) currently in use are accurate, and it is produced when power supply is turned on. The buffer managing unit 111 extracts the optimum buffer size from the prevailing residual buffer capacity and the influence degree registered in the influence degree area of the buffer use table by utilizing the buffer rating table, and when the buffer size currently in use (registered in the size area of the buffer use status area of the buffer use table) is Less than the extracted optimum buffer size, it increases the prevailing buffer size, whereas when the prevailing buffer size is greater than the optimum buffer size, it reduces the prevailing buffer size. The buffer managing unit 111 manages the buffer by updating the buffer size and also the buffer use status in the buffer use status managing table in Fig. 2 on the basis of the buffer rating table. That is, the buffer managing unit 111 dynamically changes the buffer capacity to the optimum buffer size by retrieving the buffer rating table on the basis of the influence degree (i.e., the environment weight extracted among the radio control parameters and/or load weight extracted in program operation). The numerical values in the buffer rating table in Fig. 5 are exemplary and by no means limitative.

The external device 2 shown in Fig. 1 is a data processing system such as a personal computer operable under program control by a processor (CPU, not shown).

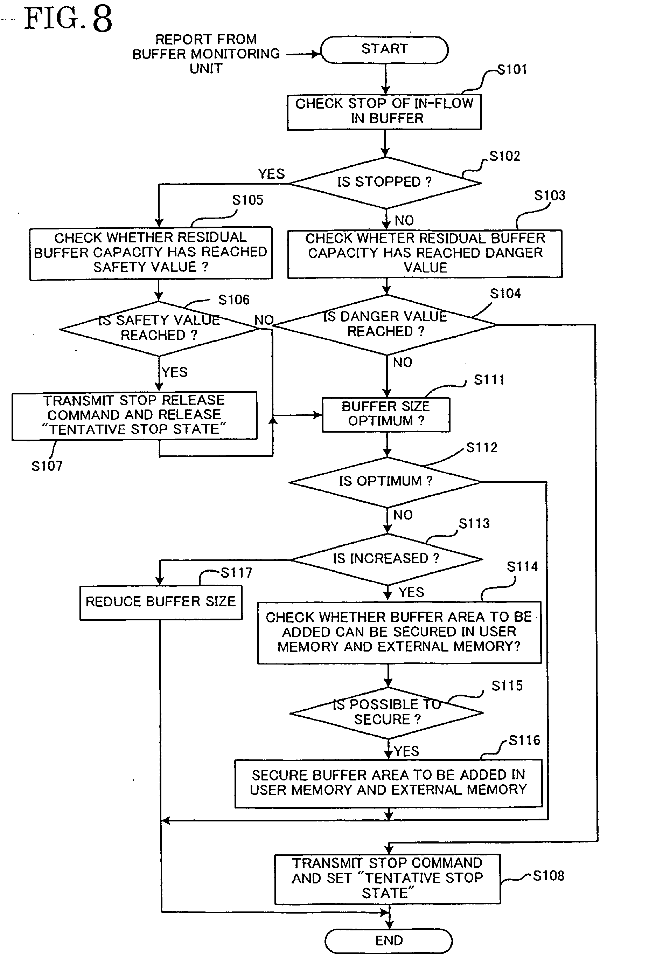

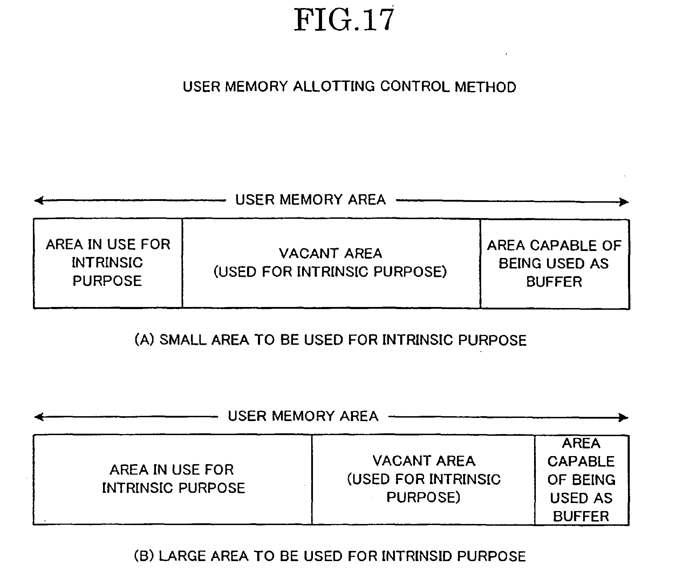

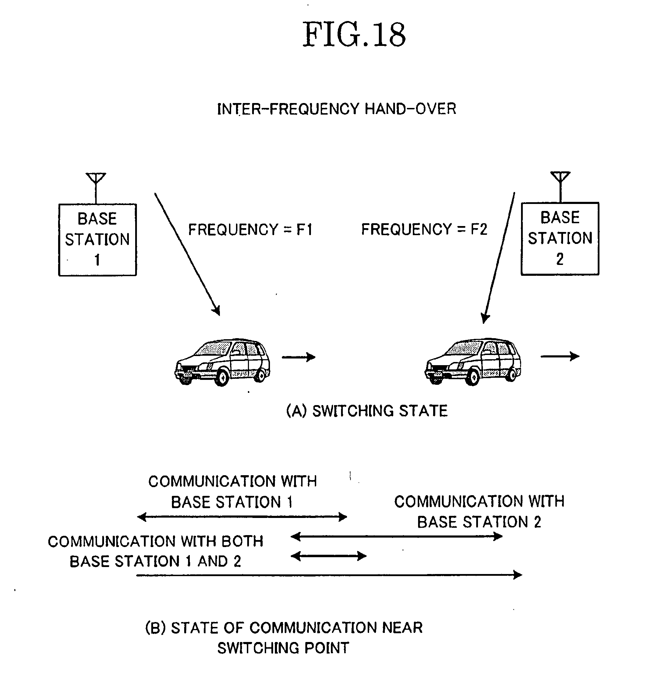

Now the operation of the embodiment of the present invention will be described with reference to Figs. 1 to 18.

Data from the external device 2 is inputted in a data format peculiar to the service via a cable to an external input terminal of the mover 1. The mover 1 has its input terminal connected to the external device interface unit 12 (such as USB or RS232C) for controlling communication with the external device 2, and it takes in data from the external device 2. The external device interface unit 12 has a terminal for receiving a flow control input, and can send out, under control by the control unit 11, a control signal (such as NACK signal) for stopping the data communication with the external device 2. The TAF unit 112 converts the data signal, having passed through external device interface unit 12, from a form peculiar to a communication protocol to a common data from. The TIF unit 113, receiving the data from the TAF unit 112, extracts a data part necessary for radio data production, and sends out the extracted data part to the DTC unit 114. The DTC unit 114 undertakes control for the radio data production, for instance preference order control of sending data, and sending timing control. The HWC unit 115 is a block for managing the entire communication with the radio network, and it translates parameters received from the radio network and sends out the result to the RCC unit 116 for managing the entire communication of the mover 1. The data group with the sending timing adjusted in the DTC unit 114, is then inputted to the HWC unit 115 for conversion to a form conforming to the radio protocol, and then transmitted by radio via the radio unit 16 and the antenna 17.

As converse flow to the above, data from the radio network is inputted via the antenna 17 and the radio unit 16 to the HWC unit 115. The HWC unit 115, which monitors the received signal at all times via the radio unit 16, extracts, among the data from the radio network, SIR data (or SIR value), Ec/No data (or Ec/No value), number of active stations and communication rate, these data being used according to the present invention. The communication data monitoring unit 118, which monitors the output of the HWC unit 115 at a predetermined interval of time, detects the extracted data. The HWC unit 115 detects the transmission power level when the power is transmitted via the radio unit 16 to the radio network, and the communication data monitoring unit 118 monitoring the output of the HWC unit 115 at a predetermined interval also detects the transmission power level. The communication data monitoring unit 118 further detects the SIR data (i.e., SIR value) and the Ec/No data (i.e., Ec/No value) in its monitoring, at a predetermined interval, of the output of the HWC unit 115 which in turn monitors the reception signal via the radio unit 16, by calculating these data on the basis of the desired wave reception power, interference signal power, reception signal power and noise power, extracted by the HWC unit 115 from the reception signal received from the ratio network. The communication data monitoring unit 118 further detects the BLER by monitoring, at a predetermined interval, blockerrors detected from the reception signal from the radio network by the HWC unit 115 monitoring the reception signal, and counting the detected block errors. The HWC unit 115 extracts the data concerning the cell select and frequency hand-over from the reception signal and reports the extracted data to the communication data monitoring unit 118.

The communication data monitoring unit 118 reports the detected SIR data (or SIR value), Ec/No data (or Ec/No value), SIR data (or SIR value), Ec/No data (or Ec/No value), BLER and transmission power level as communication control parameters to the buffer managing unit 111. On the basis of data concerning the cell selection and frequency hand-over reported to it, the communication data monitoring unit 118 causes the control unit 11 to execute respective exclusive programs.

As blocks possibly having data buffer, the external device interface unit 12, the TAF unit 112, the TIF unit 113 and the DTC unit 114 are presumable. Also, in addition to the buffer memory 15, the external memory 13 and the user memory 14 can be appropriately used as data buffer. The buffer managing unit 111 manages the status of use of all these buffers. The buffer monitoring unit 117 reports the buffer use status to the buffer managing unit 111. According to the buffer use status, the buffer managing unit 111 instructs the external device interface unit 112 to transmit an output allow/prohibit signal to the external device 2. In this case, the buffer managing unit 111 allots, based on the buffer use status, the area in the user memory 14 as data buffer of the size corresponding to the use status.

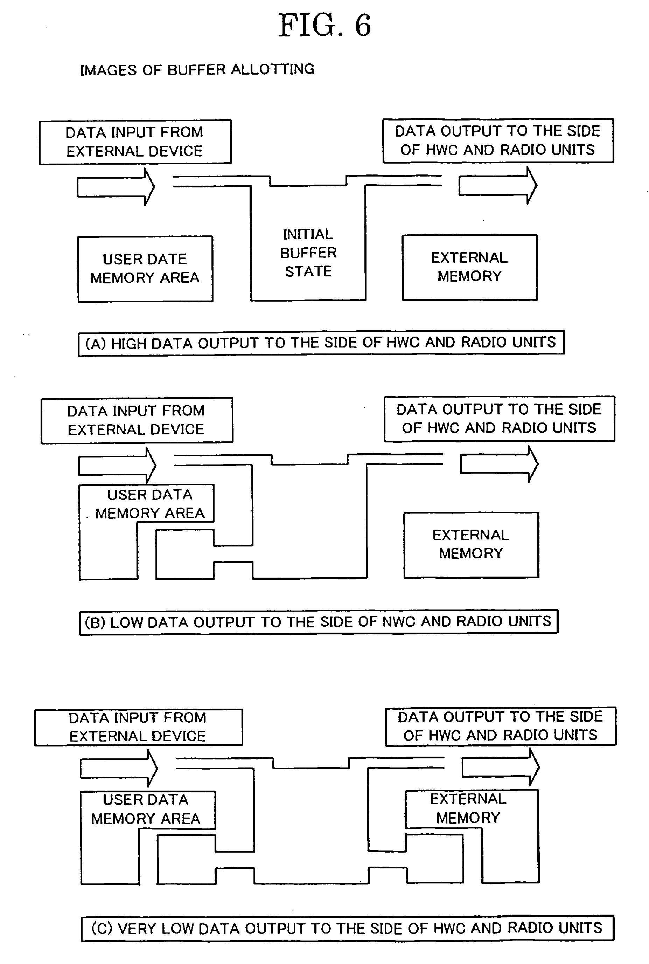

Figs. 6(a) to 6(c) show buffer allotment images.

Fig. 6(a) shows the configuration of the data buffer area in the case of a high data output transmitted via the HWC unit 115, the radio unit 16 and the antenna 17 to the radio network. As is seen, only a data buffer area secured in the buffer memory 15 is shown as data buffer. In this case, the data take-out from the external device 2 can be done with the sole data buffer secured in the buffer memory 15.

Fig. 6(b) shows the configuration of the data buffer area in the case of a low data output transmitted via the HWC unit 115, the radio unit 16 and the antenna 17 to the radio network. As is seen, the buffer memory 15 and a data buffer area secured in the user memory 14 are shown as data buffer. In this case, lest re-transfer should occur in the data take-out from the external device 2, the optimum buffer size is obtained from the buffer rating table on the basis of the residual buffer capacity and the influence degree, and the optimum data buffer is secured in the buffer memory 15 and the user memory 14.

Fig. 6(c) shows the configuration of the data buffer area in the case of a very low data output transmitted via the HWC unit 115, the radio unit 16 and the antenna 17 to the radio network. As is seen, the buffer memory 15 and data buffer areas secured in the user memory 14 and the external memory 13 are shown as data buffer. In this case, for the data take-out from the external device 2, the optimum buffer size is obtained from the buffer rating table on the basis of the residual buffer capacity and the influence degree, and securing a large optimum buffer size.

While in the description in connection to Figs. 6(a) to 6(c) the optimum buffer is secured in the order of the user memory and the external memory subsequent to the buffer memory, it is also possible to secure the optimum buffer in the order of the external memory and the user memory subsequent to the buffer memory.

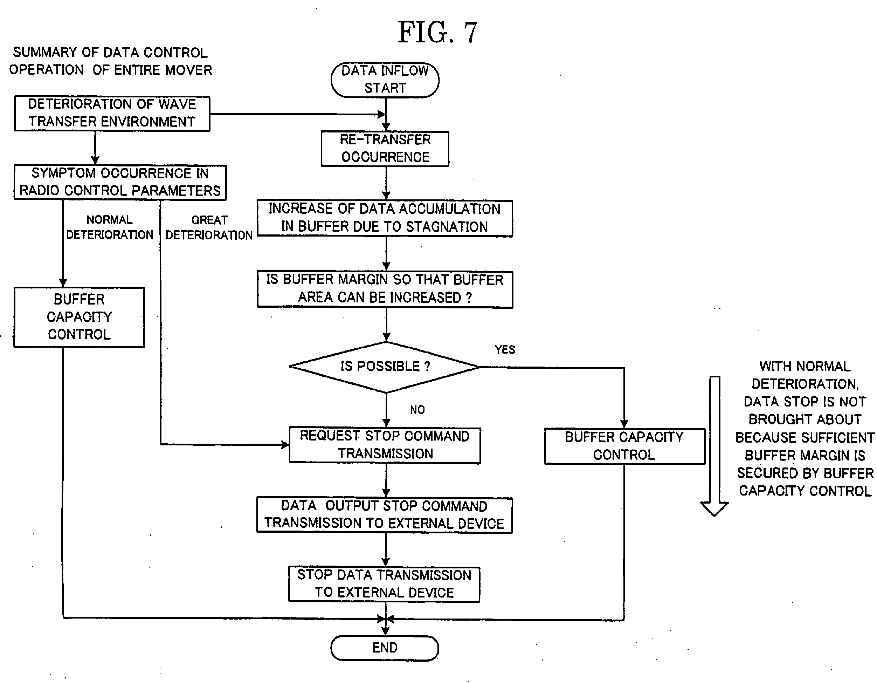

Fig. 7 is a flow chart showing the routine of data control of the entire mover 1 in the case of occurrence of a symptom in the radio control parameters due to the beginning of wave transfer environment deterioration during the transmission of data from the external device 2 via the mover 1 to the radio network.

As the radio control parameters in the case of Fig. 7, the BLER, power control and number of active stations are dealt with. The buffer operation accompanying radio control parameter changes will be briefly described.

When the BLER reported from the communication data monitoring unit 118 is good, the buffer managing unit 111 decides that the transfer environment is good and also that the buffer margin may be small owing to the absence of congestion by re-transfer, and thus it executes such control as to reduce the buffer margin. When BLER deterioration is detected, the buffer managing unit 111 predicts future re-transfer occurrence before actual re-transfer occurrence, and undertakes re-adjustment of the buffer margin beforehand.

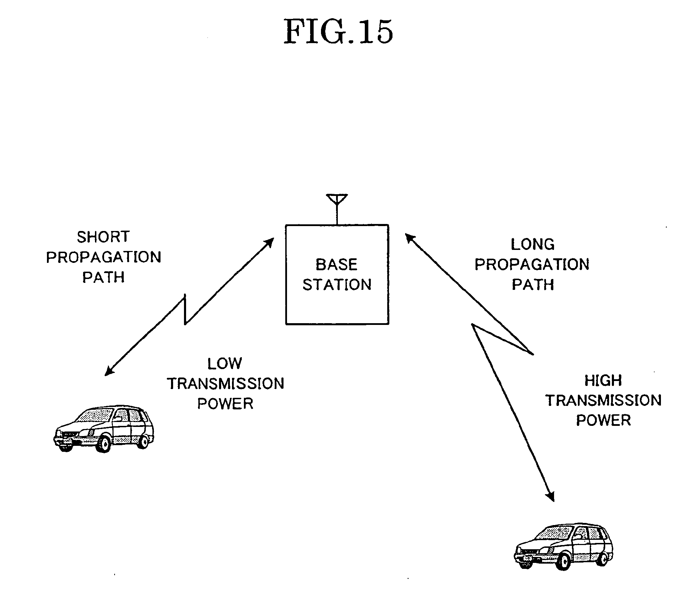

Fig. 15 shows an example of control using power up/down data. In this example, the communication data control unit 118 monitors the power data (i.e., power level of data transmitted to base station), and when the value of power transmitted from the mover 1 is greater than a preliminarily designated value, the buffer managing unit 111 decides that the influence of fading is great due to long distance from the base station, that is, long propagation path, and executes such control as to increase the buffer margin.

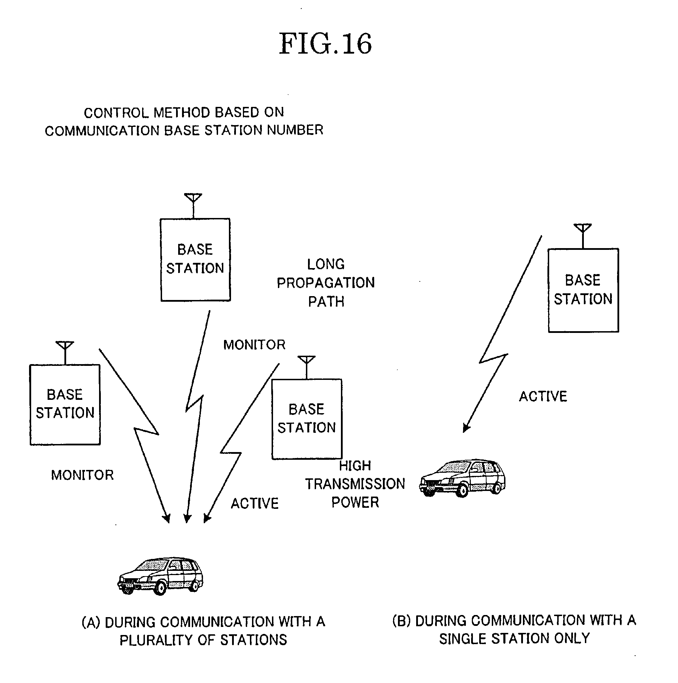

Fig. 16 shows an example of control using the active/monitor station number. When the number of active stations with a report transferred thereto from the communication data control unit 118 is large, the buffer control unit 111 decides that the possibility of simultaneous deterioration of communication with all the stations, that is, the possibility of sudden transfer quality deterioration, is low, and executes such control as to reduce the buffer margin.

Before describing the operation of the embodiment of the present invention, the buffer capacity control operation will be summarized. As the data buffer area, the user memory 14 and the external memory 13 are used in addition to the buffer memory 15, which is preliminarily allotted as exclusive buffer area in a volatile memory as the initial state of the mover. As the user memory 14, a relatively large prepared area such as a voice memory area, an image (or motion picture image) storage area and a call arrival melody storage area is assumed. Any vacancy in these areas is effectively utilized as buffer. In this case, if all the vacant areas are used as buffer, the status in which these areas are to be used for the intrinsic purpose, can no longer be coped with when such status is brought about. Accordingly, as shown in Fig. 16, on the basis of the (predicted) prevailing status of data stagnation (i.e., residual buffer capacity), the buffer managing unit 111 judges the ratio of buffer capable of being used in the user memory with reference to the buffer rating table shown in Fig. 5 to obtain the optimum buffer size. The buffer managing unit 111 also does the same judgment with respect to the external memory. Since these buffers are transient ones, when the data communication has been ended, the data remaining in the areas used as buffer is deleted at an appropriate timing.

Now, the operation of buffer capacity control will be described in detail with main reference to the flow charts of Figs. 7 to 14.

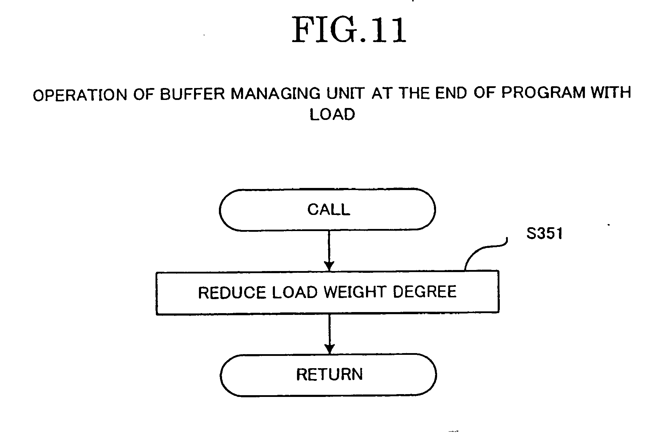

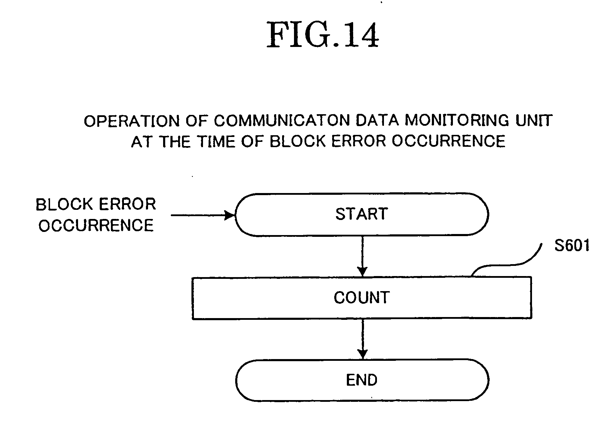

Referring to Fig. 11, when the communication data monitoring unit 118 detects a block error in the reception of data from the radio network in the HWC unit 115, it cause up-counting of a BLER counter, which is allotted to an area in a volatile memory unit (not shown, for instance a RAM) (step S601 in Fig. 14).

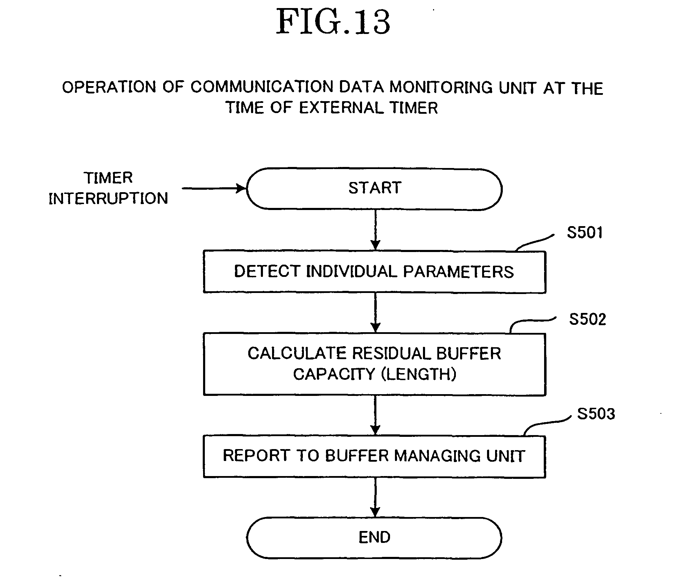

When data transfer (i.e., file transfer) to the radio network is started in response to a request form the external device 2, the control unit 11 starts a timer (not shown). The timer is set such that it is interrupted at a predetermined timing (initial value being set by the control unit 11 when power supply is turned on), and the timer interruption in the control unit 11 is brought about at a preset interval. When the timer interruption takes place, the control unit 11 hands the control over to the communication data monitoring unit 118. The communication data monitoring unit 118 thus detects the radio control parameters (i.e., BLER, transmission power level, active station number, SIR value, RSCP value, Ec/No value and communication rate) by reading out, from the HWC unit 115, the prevailing transmission power level, active station number,: parameter designation rate, RSCP value (i.e., desired wave power reception power), interference signal power, reception signal power (per chip), noise power (per chip), SIR value (desired wave power reception power/interference signal power), Ec/No (reception signal power/noise power) and count of the BLER managed in the own station (the value in this case being judged as BLER). When the communication data monitoring unit 118 has read out the BELR, it clears the BLER counter. The communication data managing unit 118 further calculates the residual buffer capacity (i.e., stagnant length in the buffer), and reports the detected radio control parameters (i.e., BLER, transmission power level, active station number, SIR value, RSCP value, Ec/No value and communication rate) and the calculated residual buffer capacity to the buffer managing unit 11 (steps S501 to S503 in Fig. 13).

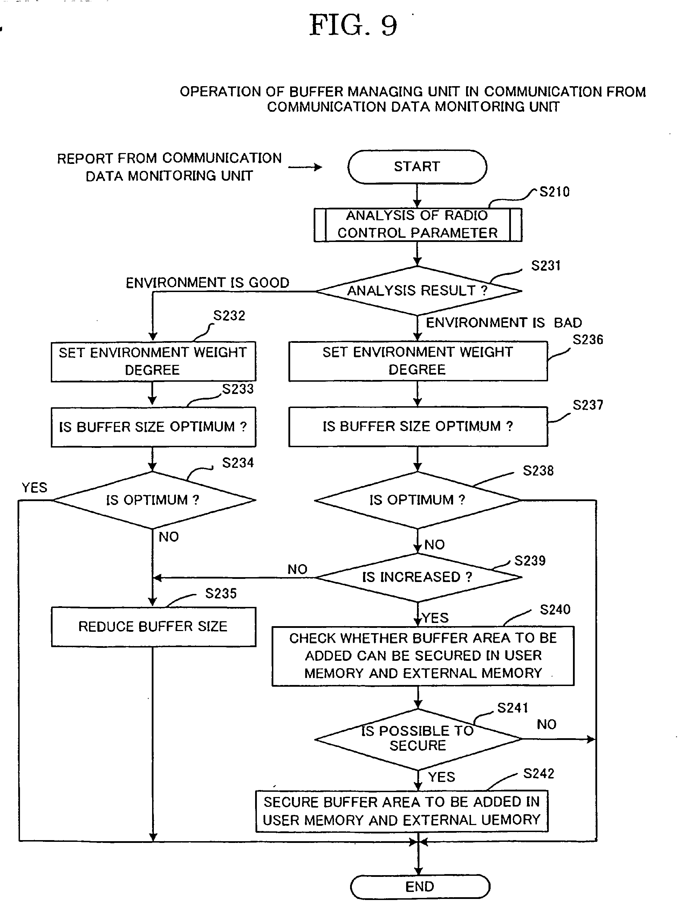

When the buffer managing unit 111 receives, in response to report from the communication data monitoring unit 118, the radio control parameters (i.e. BLER, transmission power level, active station number, SIR value, RSCP value, Ec/No value and communication rate) and the residual buffer capacity, it analyzes the individual radio control parameters by comparison to the contents in the radio control parameter rating table in the table 18 (in this case retrieving and comparing the reported radio control parameters and corresponding prescribed values one by one). When all the prescribed values are met, the buffer managing unit 111 decides that "ENVIRONMENT IS GOOD", while when even a single one of the parameters fails to meet the prescribed value, it decides that "ENVIRONMENT IS BAD" (steps S210 and S231 in Fig. 9).

In the radio control parameter analysis executed by the buffer managing unit 111 in the step S210, a case of failure of meeting a plurality of prescribed values is conceivable. In this case, the badness of the environment is judged from a weight degree of environment (hereinafter referred to environment weight degree) which is given in dependence on the status of overlap. For example, the buffer managing unit 111 preliminarily clears the environment weight degree (for instance register for calculation, and whenever it detects failure of meeting the prescribed value by a radio control parameter in the course of comparison of the parameters one by one, a weight degree corresponding to the radio control parameter failing to meet the prescribed value is added to the environment weight degree for the calculation. As a result of comparison of all the radio control parameters, with environment weight degree of "0" the buffer managing unit 111 judges that "ENVIRONMENT IS GOOD", while with an environment weight degree of "1" or more (in the Fig. 3 example in which seven radio control parameters each being "1" are involved, with all the parameters failing to meet the prescribed values the calculated environment weight degree being "7") it decides that "ENVIRONMENT IS BAD".

When it is found in the step S231 that the analysis result is "ENVIRONMENT IS BAD", the buffer managing unit 111 sets the calculated environment weight degree in the environment weight degree area in the buffer use status managing table in the table 18, and also sets the sum of the set environment weight degree and the already set load weight degree is the influence degree area (step S236).

After the setting of the influence degree in the step S236, the buffer managing unit 111 extracts the optimum buffer size by retrieving the buffer rating table (see Fig. 5) in the table 18 on the basis of the reported residual buffer capacity and the calculated influence degree. The buffer managing unit 111 further compares the extracted optimum buffer size and the size in the buffer use status area in the buffer use status managing table for optimum buffer size confirmation, and when the two sizes are identical, it decides that the buffer size is optimum. This brings an end to the routine (steps S237 and 238).

When the compared buffer sizes are not found to be identical (i.e., the buffer size is not found to be optimum) in the step S238, the buffer managing unit 111 brings about the buffer rating table buffer size. When it is found that the buffer size is reduced (the prevailing buffer size in use being greater than the optimum buffer size), the buffer managing unit 111 reduces the buffer size, registers a memory (or memories) and addresses (i.e., start and end addresses) thereof as the status of use of the reduced buffer in the use memory area, and registers the corresponding buffer size (i.e., extracted optimum buffer size) in the size area, thus bringing an end to the routine (steps S239 and S235).

When it is found in the step S239 that the buffer size is increased (the prevailing buffer size in use being less than the optimum buffer size), the buffer managing unit 111 checks whether it is possible to secure a buffer area to be added in the user memory 14 and the external memory 13, when possible, secures the buffer area in the user memory 14 and the external memory 13, registers a memory (or memories) to be used as buffer and addresses (i.e., start and end addresses) thereof as status of use of the secured buffer in the use memory area, and registers the corresponding buffer size (i.e., extracted optimum buffer size) in the size area, thus bringing an end to the routine. When it is not found in the step S241 to secure buffer area to be added, the buffer managing unit 111 directly brings an end to the routine (steps S240 to S242).

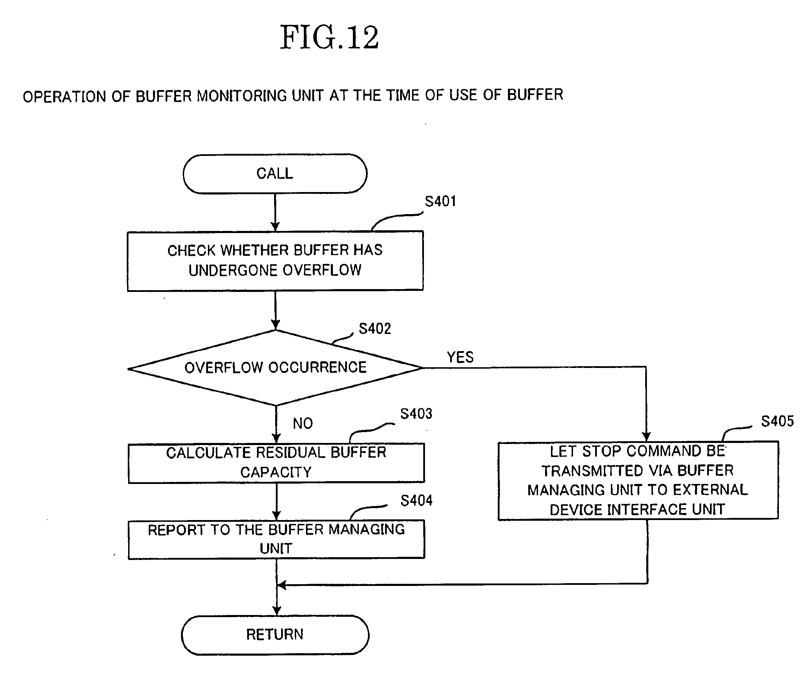

Whenever data is received in the buffer or transmitted therefrom, the sub-routine program corresponding to the operation routine shown in Fig. 12 is executed. That is, whenever data is received in the buffer or transmitted therefrom, the buffer monitoring unit 117 executes this routine.

The buffer managing unit 117 checks whether the buffer overflow has taken place, and when it does not detect buffer overflow, it calculates the size of stagnation in the prevailing buffer (i.e., residual buffer capacity), and reports the result to the buffer managing unit 111 (steps S401 to S404 in Fig. 12).

When the buffer monitoring unit 117 detects buffer overflow in the step S402, it reports this to the buffer managing unit 111. Receiving the report, the buffer managing unit 111 instructs the external device interface unit 12 to transmit a stop command based on the overflow detection, thus bringing an end to the routine (step S405).

The buffer managing unit 111 receiving the report from the buffer monitoring unit 117 in the step S404, checks for the dangerous value of buffer, that is, checks whether the in-flow stop state area in the buffer use status area in the buffer use status managing table in the table 18 is "ON" (steps S101 and S102).

When the buffer managing unit 111 detects "ON" in the step S102, it decides that data in-flow in the buffer has been stopped, and calculates the safety value of buffer from the size in the buffer use status area in the buffer use status managing table in the table 18 (for instance, Safety value = Size 0.2, the size in this case being the optimum buffer size calculated from the buffer rating table). When the buffer managing unit 111 decides that the residual buffer capacity has reached the calculated safety value, it instructs the external device interface unit 12 to transmit a stop release command, and sets "OFF" in the in-flow stop state area in the buffer use status area in the buffer use status managing table (or clears the area). When the buffer managing unit 111 fails to decide in the step S106 that the safety value has been reached, it decides that it is impossible to release the in-flow stop state of the buffer, and jumps to a step S111. In this case, the safety value is a threshold value of buffer (steps S105 to S107).

When the buffer managing unit 111 fails to detect the stop state in the step S102, it calculates the dangerous value of buffer from the size in the buffer use status area in the buffer use status managing table in the table 18 (the size in, for instance, Dangerous value = Size 0.8, the size in this case being the optimum buffer size calculated from the buffer rating table). When the buffer managing unit 111 decides that the residual buffer capacity has reached the calculated dangerous value, it instructs the external device interface unit 12 to transmit a stop command, and sets "ON" in the in-flow stop state area in the buffer use status area in the buffer use status managing table, thus bringing an end to the routine. In this case, the dangerous value is a threshold value of buffer (steps S103, S104 and S108).

When the buffer managing unit 111 fails to decide the reaching of the dangerous value in the step S104, it jumps to the step S111, and checks for any buffer margin from the state of use of the buffer. More specifically, the buffer managing unit 111 extracts the optimum buffer size by retrieving the buffer rating table (see Fig. 5) in the table 18 on the basis of the reported residual buffer capacity and the influence degree in the buffer use status managing table. The buffer managing unit 111 then checks whether the extracted optimum buffer size is optimum by comparing the extracted buffer size to the size in the buffer use state area in the buffer use status managing table, and when it finds that the compared sizes are identical, it decides that the extracted buffer size is optimum, thus bringing an end to the routine (steps S111 and S112).

When the buffer managing unit 111 fails to find identity of the sizes, it operates to bring the extracted buffer size to the buffer size detected in the buffer rating table. When the buffer managing unit 111 detects buffer size reduction (i.e., prevailing buffer size in use Optimumbuffer size), it reduces the buffer size, registers a memory or memories to be used as buffer and addresses (i.e., start and end addresses) thereof as the status of use of the reduced size buffer in the user memory area (or use memory areas in case when two or more memories are involved), and registers the corresponding buffer size (i.e., extracted optimum buffer size) in the size area, thus bringing an end to the routine (steps S113 and S117).

When the buffer managing unit 111 detects buffer size increase (i.e., Prevailing buffer size in use Optimum buffer size) in the step S113, it checks whether it is possible to secure buffer area to be added in the user memory 14 and the external memory 13. When the buffer managing unit 111 decides that it is possible, it secures the buffer area in the user memory 14 and the external memory 13, registers a memory or memories to be used as buffer and addresses (i.e., start and end addresses) thereof as the status of use of the secured buffer in the use memory area (or use memory areas in case when two or more are involved) in the buffer use status managing table, and registers the corresponding buffer size (i.e., extracted optimum buffer size) in the size area, thus bringing an end to the routine. When the buffer managing unit 111 decides in the step S115 that it is possible to secure buffer area, it directly brings an end to the routine (steps S114 to S116).

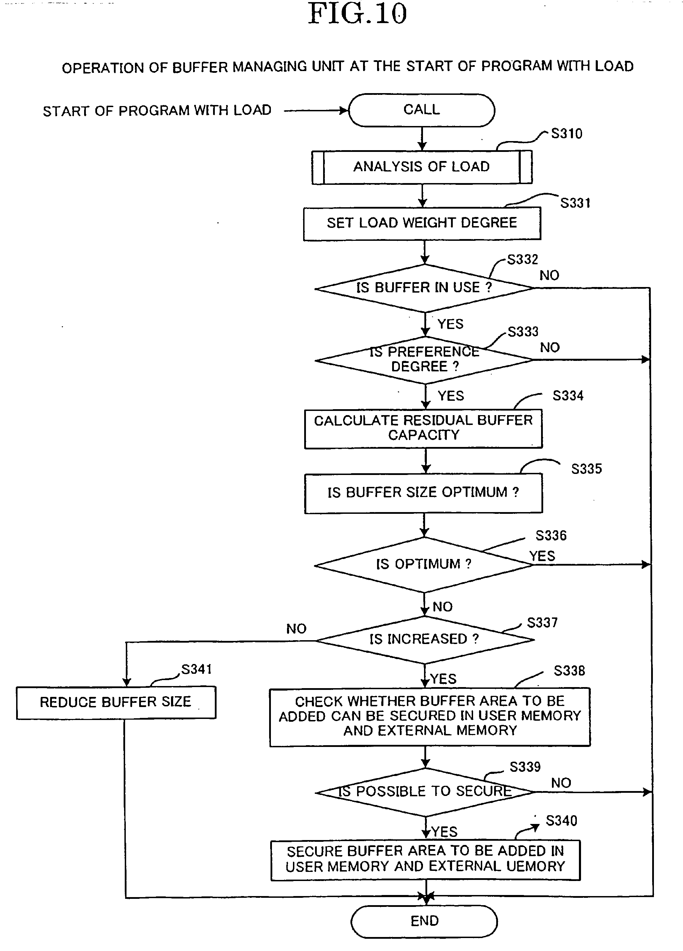

In the meantime, among the causes of internal load increase are key operation, light turn-"ON", melody performance, camera/video operation, etc. When these operations are performed, the process load in the CPU is increased, leading to the possibility of reduction of the data quantity that can be processed in unit time. In this case, the buffer managing unit 111 of the control unit 11 performs control such as to increase the buffer. it is also possible that the preference order of processes is allotted automatically or by the user. For example, when the status of use of buffer is such that overflow of data is possible, such control is done as to cause data processing in pref erence to the above MMI (man machine interface) operation, and converse control is also conceivable. Aside from the MMI operation, at the time of such radio control as cell section operation and inter-frequency hand-over, the CPU load is increased due to increase of the number of communication base stations. Thus, the buffer managing unit 111 performs control such as to increase the buffer. In this case, the preference order should be highest because of the communication control. This is taken into considerations in the flow charts of Figs. 10 and 11. Specifically, when the control unit 11 starts to execute a program having influence on the load, a program showing the operation shown in Fig. 10 is executed (as sub-routine), and when this program is cleared, a program showing the operation shown in Fig. 11 is executed (in sub-routine).

At the start of a program with a load, the control unit 11 hands the control over to the buffer managing unit 111. The buffer managing unit 111 with the control handed over to it, analyzes the load by retrieving the processor (CPU) load rating table shown in Fig. 4 on the basis of the operation title of the program with the load and detecting the weight degree and preference mode (step S310 in Fig. 10).

The buffer managing area 111 sets the extracted loadweight degree in the load weight degree area in the buffer use status managing table in the table 18, and also sets the sum of the environment weight degree in the buffer use status managing table and the set load weight degree in the influence area (step S331).

The buffer managing unit 111 decides that the extracted preference degree in the use of the buffer is "ON", it calculates the prevailing residual buffer capacity. When the buffer managing unit 111 decides that the buffer has not been used or does not decide that the preference degree is "ON", it directly brings an end to it (steps S332 to S334). With the preference degree in the use of the buffer being "ON", the buffer managing unit 111 decides that no preference is needed, and executes the buffer capacity control when receiving report from the buffer managing unit 117 or from the communication data monitoring unit 118.

The buffer managing unit 111 extracts the optimum buffer size by retrieving the buffer rating table in the table 18 (see Fig. 5) on the basis of the extracted residual buffer capacity and the influence degree in the buffer use status managing table. The buffer managing unit 111 also checks whether the extracted optimum buffer size is optimum by comparing the extracted buffer size to the buffer use status size in the buffer use status managing table, and when the compared sizes are identical, it decides that the extracted buffer size is optimum, thus bringing an end to the routine (steps S334 and S335).

When the buffer managing unit 111 fails to decide any identity of sizes, it operates to bring the buffer size to the one detected in the buffer rating table. When the buffer managing unit 111 decides that the buffer size is reduced (i.e., Size of buffer in use Optimum buffer size), it reduces the buffer size, registers the memory or memories to be used as buffer and addresses (i.e., start and end addresses) thereof as the status of use of the reduced size buffer in the use memory area (or areas if two or more memories are involved), and registers the corresponding buffer size (i.e., extracted optimum buffer size) in the size area, thus bringing an end to the routine (steps S336, S337 and S341).

When the buffer managing unit 111 decides in the step S337 that the buffer size is increased (i.e., Size of buffer in use Optimum buffer size), it checks whether it s possible to secure buffer area to be added in the user memory 14 and the external memory 13. When the buf fermanaging unit 111 decides that it is possible, it secures buffer area in the user memory 14 and the external memory 13, registers the memory or memories to be used and addresses (i.e., start and end addresses) thereof as the status of use of the secured buffer in the use memory area (or areas when two or more memories are involved), and registers the corresponding buffer size (i.e., extracted optimum buffer size) in the size area, thus bringing an end to the routine. When the buffer managing unit 111 fails to decide in the step S339 that it is possible to secure buffer size, it directly brings an end to the routine (steps S338 to S340).

As has been shown, the buffer capacity is dynamically changed by extracting the weight degrees representing the degrees of badness of environment from the radio control parameter rating table in correspondence to the individual ratio control parameters with reference to the buffer rating table in the table 18 and on the basis of the environment weight degree as the total sum of the extracted weight degrees. Thus, it is possible to prevent data loss without preparation of wasteful memory space by predicting data stagnation before data turns to be stagnant in the buffer.

Also, as has been shown, aside from the above environment weight degree, at the start of execution of a program set as a process with load the Load weight degree representing the degree of load is extracted from the processor (CPU) load rating table, and the buffer capacity is dynamically changed by using the buffer rating table in the table 18 on the basis of the extracted load weight degree and the environment weight degree (or only the load weight degree in the case of absence of the environment weight degree). Thus, it is possible to prevent data loss without preparing wasteful memory space by predicting data stagnation before data turns to re stagnant in the buffer. Furthermore, when environment or the load status is deteriorated, the vacant memory space in the memory area used by the user is used as buffer. Thus, it is unnecessary to preliminarily prepare any memory exclusively used as buffer by taking the environment badness or load into considerations.

Further, as shown above, the weight degrees representing the degrees of badness of environment are extracted from the radio control parameter rating table in the table 18 in correspondence to the values of individual radio control parameters, and the danger degree or safety degree is extracted from the buffer rating table in the table 18 on the basis of the environment weight degree as the total sum of the extracted weight degrees. Then, when the prevailing residual buffer capacity has reached the extracted danger degree, the in-flow of data in the external device is tentatively stopped, while when the prevailing residual buffer capacity has reached the extracted safety degree, the tentative stop of the data in-flow in the external device is released. Thus, it is possible to reduce the frequency of stopping the transmission due to insufficient buffer.

As has been described in the foregoing, according to the present invention, before data turns tobe stagnant in the buffer, data stagnation is predicted by predicting the buffer capacity that is thought to be necessary from the degree of individual communication control data (i.e., radio control parameters) and/or the degree of load and degree of processor (CPU), and the buffer that is thought to be necessary is secured based on the degree of the individual communication control data and/or degree of load and degree of processor (CPU). Thus, it is possible to prevent data loss without preparing any wasteful memory space.

Also, according to the present invention, before data turns to be stagnant in the buffer, the threshold value of the buffer is predicted from the degree of the individual communication control data (i.e., radio control parameters) and/or the degree of load or degree of processor (CPU), and the flow-in of data with respect to the external device is restricted on the basis of the degree of the individual communication control data and/or the degree of load and degree of processor (CPU). Thus, it is possible to reduce the frequency of stopping the transmission due to insufficient butter and thus contribute to throughput improvement.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. A data flow control system having a mover (1) for storing data received from an external device in a buffer, processing the stored data and transmitting the stored data (2) to a radio network, wherein the mover is adapted to execute a capacity control of the buffer, which comprises:
a first changing means for dynamically changing the capacity of the buffer based on the degree of communication control data changing with the environment of the radio network, and
a monitoring/checking means (118) for monitoring, during transmission from the external device to the radio network, multiple individual communication control data changing with the environment of the radio network and checking whether the environment is good or bad; **characterised by**
a first extracting means for extracting, upon decision by the monitoring/checking means that the environment is bad, an environment weight degree representing the degree of the badness of the environment by summing up individual weight degrees corresponding to the individual communication control data;
wherein
said first changing means is adapted to dynamically change the capacity of the buffer by using the environment weight degree and a processor load degree as a measure of change in the buffer capacity.

2. The data flow control system according to claim 1, further comprising
a first limiting means for changing a threshold value of the buffer based on the degree of communication control data changing with the environment of the radio network and limiting, upon reaching of the threshold value of the buffer, the quantity of in-flow data from the external device (2).

3. The data flow control system according to claim 1, which further comprises a second changing means for dynamically changing the capacity of the buffer based on the degree of load in the processing of a processor in the mover.

4. The data flow control system according to claim 2, which further comprises a second limiting means for limiting, upon reaching of the threshold value of the buffer, the quantity of in-flow data from the external device by changing the threshold value of the buffer based on the degree of processing of a processor in the mover (1).

5. A data flow control system according to claim 1, further comprising
a second extracting means for extracting, during transmission from the external device (2) to the radio network and at the start of a program preset as a process with a load, a second weight degree from a preset value based on the degree of the load in the process executed by the processor executing the program; and
a second changing means for dynamically changing the capacity of the buffer by using the second weight degree extracted in the second extracting means as a measure of change of the buffer capacity.

6. The data flow control system according to claim 1, which further comprises:
a first checking means for checking whether the capacity of the buffer, set at the time of data reception from the external device or data transmission to the radio network, has become the optimum buffer capacity preset on the basis of the extracted first weight degree; and
a third changing means for dynamically changing the buffer capacity unless the first checking means decides that the buffer capacity has become the optimum buffer capacity.

7. The data flow control system according to one of claims 1 and 6, which further comprises:
a second checking means for checking, at the time of data reception from the external device (2) or data transmission to the radio network, whether the residual buffer capacity has become a preset danger value on the basis of the extracted first weight degree;
a stopping means for tentatively stopping data in-flow with respect to the external device (2) when the second checking means decides that the residual buffer capacity has reached the danger value;
a third checking means for checking, at the time of data reception from the external device or data transmission to the radio network, whether the residual buffer capacity has become a preset safety value on the basis of the extracted first weight degree; and
a releasing means for releasing the tentative stop of the in-flow of data with respect to the external device when the third checking means decides that the residual buffer capacity has reached the safety value.

8. The data flow control system according to claim 5, which further comprises:
a first checking means for checking at the timer of data reception from the external device (2) or data transmission to the radio network, whether the buffer capacity has become a preset optimum buffer capacity on the basis of the extracted first or second weight degree; and
a third changing means for dynamically changing the buffer capacity unless the first checking means decides that the buffer capacity has become the optimum buffer capacity.

9. The data flow control system according to claim 5, which further comprises:
a second checking means for checking, at the time of data reception from the external device or data transmission to the radio network, whether the residual buffer capacity has reached a preset danger value on the basis of the extracted first and/or second weight degree;
a stopping means for tentatively stopping, when the second checking means decides that the residual buffer capacity has reached a danger value, the in-flow of data with respect to the external device (2);
a third checking means for checking, at the time of data reception from the external device (2) or data transmission to the radio network, whether the residual buffer capacity has reached a preset safety value on the basis of the extracted first and/or second weight degrees; and
a releasing means for releasing, when the third checking means decides that the residual buffer capacity has reached the preset safety value, the in-flow of data with respect to the external device (2).

10. The data flow control system according to claim 5, wherein the second changing means includes:
a means for dynamically changing the buffer capacity as soon as the extracted second weight degree is found to be in a preference mode; and
a means for changing, unless the extracted second weight degree is found to be the preference mode, the buffer capacity at the time of data reception from the external device (2) or data transmission to the radio network.

11. The data flow control system according to one of claims 1, 2 and 5, wherein the communication control data contains at least one of SIR data, BLER data, transmission power control data, RSCP data, Ec/No data, transmission rate data and active station number data.

12. The data flow control system according to one of claims 3, 4 or 5, wherein the processing of the processor is internal processing including at least either key operation, light turn-"on", melody performance and camera/video operation.

13. The data flow control system according to one of claims 3, 4 and 5, wherein the processing of the processor is radio control processing including at least cell selection operation and frequency hand-over.

14. The data flow control system according to claims 1 to 9, wherein the buffer is commonly provided by an exclusive buffer memory space (15) and a memory space (13, 14) for other purposes.

15. The data flow control system according to claim 14, wherein the memory for other purposes is at least either one of a user memory (14) allotted to the user and a detachable external memory (13).

16. A data flow control method of a mover (1) which stores data received from an external device in a buffer, processes the stored data and transmits the stored data (2) to a radio network, wherein the mover is adapted to execute a capacity control of the buffer, which comprises:
a step of dynamically changing the capacity of the buffer based on the degree of communication control data changing with the environment of the radio network, and
monitoring, during transmission from the external device to the radio network, multiple individual communication control data changing with the environment of the radio network and checking whether the environment is good or bad;
**characterised by**
extracting upon decision by the checked result that the environment is bad, and environment weight degree representing the degree of the badness of the environment by summing up individual weight degrees corresponding to the individual communication control data; and
dynamically changing the capacity of the buffer by using the environment weight degree and a processor load degree as a measure of change in the buffer capacity.

17. The data flow control method according to claim 16, further comprising a step of
limiting, upon reaching of the threshold value of the buffer, the quantity of in-flow data from the external device (2).

18. The data flow control method according to claim 16, which further comprises a step of dynamically changing the capacity of the buffer based on the degree of load in the processing of a processor in the mover.

19. The data flow control method according to claim 17, which further comprises a step of limiting, upon reaching of the threshold value of the buffer, the quantity of in-flow data from the external device by changing the threshold value of the buffer based on the degree of processing of a processor in the mover.

20. The data flow control method according to claim 16, further comprising the steps of:
extracting, during transmission from the external device to the radio network and at the start of a program preset as a process with a load, a second weight degree from a preset value based on the degree of the load in the process executed by the processor executing the program; and
dynamically changing the capacity of the buffer by using the second weight degree extracted in the second extracting means as a measure of change in the buffer capacity.

21. The data flow control method according to claim 16, which further comprises steps of:
checking whether the capacity of the buffer, set at the time of data reception from the external device or data transmission to the radio network, has become the optimum buffer capacity preset on the basis of the extracted first weight degree; and
dynamically changing the buffer capacity unless the first checked result that the buffer capacity has become the optimum buffer capacity.

22. The data flow control method according to one of claims 16 and 21, which further comprises steps of:
checking, at the time of data reception from the external device (2) or data transmission to the radio network, whether the residual buffer capacity has become a preset danger value on the basis of the extracted first weight degree;
tentatively stopping data in-flow with respect to the external device when the checked result that the residual buffer capacity has reached the danger value;
checking, at the time of data reception from the external device or data transmission to the radio network, whether the residual buffer capacity has become a preset safety value on the basis of the extracted first weight degree; and
releasing the tentative stop of the in-flow of data with respect to the external device when the checked result that the residual buffer capacity has reached the safety value.

23. The data flow control method according to claim 20, which further comprises steps of:
checking, at the time of data reception from the external device or data transmission to the radio network, whether the buffer capacity has become a preset optimum buffer capacity on the basis of the extracted first or second weight degree; and
dynamically changing the buffer capacity unless the checked result is that the buffer capacity has become the optimum buffer capacity.

24. The data flow control method according to one of claims 20 and 23, which further comprises steps of:
checking, at the time of data reception from the external device (2) or data transmission to the radio network, whether the residual buffer capacity has reached a preset danger value on the basis of the extracted first and/or second weight degree;
tentatively stopping, when the checked result is that the residual buffer capacity has reached a danger value, the in-flow of data with respect to the external device;
checking, at the time of data reception from the external device or data transmission to the radio network and when the in-flow of data is stopped, whether the residual buffer capacity has reached a preset safety value on the basis of the extracted first and/or second weight degrees; and
releasing, when the checked is that the residual buffer capacity has reached the preset safety value.

25. The data flow control method according to claim 20, which further comprises steps of:
dynamically changing, when the extracted second weight degree is in a preference mode at the start of a program set as a process with a load in the transmission of data from the external device to the radio network; and
changing, unless the extracted second weight degree is found to be in the preference mode, the buffer capacity at the tine of data reception from the external device (2) or data transmission to the radio network.

26. The data flow control method according to one of claims 16, 17 and 20, wherein the communication control data contains at least either one of SIR data, BLER data, transmission power control data, RSCP data, Ec/No data, transmission rate data and active station number data.

27. The data flow control method according to one of claims 19, 20 and 22, wherein the processing of the processor is internal processing including at least either key operation, light turn-"on", melody performance and camera/video operation.

28. The data flow control method according to one of claims 18, 19 and 20, wherein the processing of the processor is radio control processing including at least cell selection operation and frequency hand-over.

29. The data flow control method according to one of claims 16 to 25, wherein the buffer is commonly provided by an exclusive buffer memory space (15) and a memory space for other purposes.

30. The data flow control method according to claim 29, wherein the memory for other purposes is at least either one of a user memory (14) allotted to the user and a detachable external memory (13).

31. A data flow control program of a mover (1) which stores data received from an external device in a buffer, processes the stored data and transmits the stored data (2) to a radio network, wherein the program causes a computer to function as
a first changing means for dynamically changing the capacity of the buffer based on the degree of communication control data changing with the environment of the radio network, and
a monitoring/checking means (118) for monitoring, during transmission from the external device to the radio network, multiple individual communication control data changing with the environment of the radio network and checking whether the environment is good or bad; **characterised by**
a first extracting means for extracting, upon decision by the checked result that the environment is bad, an environment weight degree representing the degree of the badness of the environment by summing up individual weight degrees corresponding to the individual communication control data; wherein
said first changing means is adapted to dynamically change the capacity of the buffer by using the environment weight degree and a processor load degree as a measure of change in the buffer capacity.

32. The data flow control program according to claim 31, further causing the computer to function as a first liming means for changing a threshold value of the buffer based on the degree of communication control data changing with the environment of the radio network and limiting, upon reaching of the threshold value of the buffer, the quantity of in-flow data from the external device (2).

33. The data flow control program according to claim 31, which further features causing the computer to function as a second changing means for dynamically changing the capacity of the buffer based on the degree of load in the processing of a processor in the mover.

34. The data flow control program according to claim 32, which further features causing the personal computer to function as a second limiting means for limiting, upon reaching of the threshold value of the buffer, the quantity of in-flow data from the external device by changing the threshold value of the buffer based on the degree of processing of a processor in the mover (1).

35. A data flow control program according to claim 31, further causing the computer to function as:
a second extracting means for extracting, during transmission from the external device (2) to the radio network and at the start of a program preset as a process with a load, a second weight degree from a preset value based on the degree of the load in the process executed by the processor executing the program; and
a second changing means for dynamically changing the capacity of the buffer by using the second weight degree extracted in the second extracting means as a measure of change of the buffer capacity.

36. The data flow control program according to claim 31, which further features causing the computer to function as:
a first checking means for checking whether the capacity of the buffer, at the timer of data reception from the external device or data transmission to the radio network, has become the optimum buffer capacity preset on the basis of the extracted first weight degree; and
a third changing means for dynamically changing the buffer capacity unless the first checking means decides that the buffer capacity has become the optimum buffer capacity.

37. The data flow control program according to one of claims 31 and 36, which further features causing the computer to function as:
a second checking means for checking, at the time of data reception from the external device or data transmission to the radio network, whether the residual buffer capacity has reached a preset danger value on the basis of the extracted first and/or second weight degree;
a stopping means for tentatively stopping, when the second checking means decides that the residual buffer capacity has reached the danger value, the in-flow of data with respect to the external device (2);
a third checking means for checking, at the time of data reception from the external device or data transmission to the radio network, whether the residual buffer capacity has reached a preset safety value on the basis of the extracted first and/or second weight degrees; and
a releasing means for releasing the tentative stop of the in-flow of data, when the third checking means decides that the residual buffer capacity has reached the preset safety value.

38. The data flow control program according to claim 35, which further features causing the computer to function as:
a first checking means for checking, at the time of data reception from the external device (2) or data transmission to the radio network, whether the buffer capacity has become a preset optimum buffer capacity on the basis of the extracted first or second weight degree; and
a third changing means for dynamically changing the buffer capacity unless the first checking means decides that the buffer capacity has become the optimum buffer capacity.

39. The data flow control program according to one of claims 35 and 38, which further features causing the computer to function as:
a second checking means for checking, at the time of data reception from the external device or data transmission to the radio network, whether the residual buffer capacity has reached a preset danger value on the basis of the extracted first and/or second weight degree;
a stopping means for tentatively stopping, when the second checking means decides that the residual buffer capacity has reached the danger value, the in-flow of data with respect to the external device (2);
a third checking means for checking, at the time of data reception from the external device or data transmission to the radio network, whether the residual buffer capacity has reached a preset safety value on the basis of the extracted first and/or second weight degrees; and
a releasing means for releasing the tentative stopping of date in-flow, when the third checking means decides that the residual buffer capacity has reached the preset safety value.

40. The data flow control program according to claim 35, which further features causing the computer to function as:
a means for dynamically changing the buffer capacity as soon as the extracted second weight degree is found to be in a preference mode; and
a means for changing, unless the extracted second weight degree is found to be the preference mode, the buffer capacity at the tine of data reception from the external device (2) or data transmission to the radio network.

41. The data flow control program according to one of claims 31, 32 and 35, wherein the communication control data contains at least either one of SIR data, BLER data, transmission power control data, RSCP data, Ec/No data, transmission rate data and active station number data.

42. The data flow control program according to one of claims 33, 34 and 35, wherein the processing of the processor is internal processing including at least either key operation, light turn-"on", melody performance and camera/video operation.

43. The data flow control program according to one of claims 33, 34 and 35, wherein the processing of the processor is radio control processing including at least cell selection operation and frequency hand-over.

44. The data flow control program according to one of claims 31 to 40, wherein the buffer is commonly provided by an exclusive buffer memory space (15) and a memory space (13, 14) for other purposes.

45. The data flow control program according to claim 44, wherein the memory for other purposes is at least either one of a user memory (14) allotted to the user and a detachable external memory .

## Patentansprüche

1. Datenfluss-Steuersystem mit einer bewegbaren Vorrichtung (1) zum Speichern von Daten, die von einer externen Vorrichtung empfangen werden, in einem Buffer, Bearbeiten der gespeicherten Daten und Übertragen der gespeicherten Daten (2) an ein Funknetzwerk, wobei die bewegbare Vorrichtung ausgebildet ist, eine Kapazitätskontrolle des Buffers durchzuführen, mit:
einer ersten Änderungseinrichtung zum dynamischen Ändern der Kapazität des Buffers basierend auf dem Grad von Kommunikationssteuerdaten, die sich mit der Umgebung des Funknetzwerkes ändern, und
einer Überwachungs-/Prüfeinrichtung (118) zum Überwachen von mehreren individuellen Kommunikationssteuerdaten, die sich mit der Umgebung des Funknetzwerkes ändern, während einer Übertragung von der externen Vorrichtung an das Funknetzwerk und zum Überprüfen, ob die Umgebung gut oder schlecht ist, **gekennzeichnet durch**
eine erste Extraktionseinrichtung zum Extrahieren bei Entscheidung **durch** die Überwachungs-/Prüfeinrichtung, dass die Umgebung schlecht ist, eines Umgebungsgewichtsgrades, der den Grad der Schlechtheit der Umgebung angibt, **durch** Aufsummieren von individuellen Gewichtsgeraden entsprechend den individuellen Kommunikationssteuerdaten, wobei
die erste Änderungseinrichtung ausgebildet ist, dynamisch die Kapazität des Buffers **durch** Verwendung des Umgebungsgewichtsgrades und eines Prozessorbelastungsgrades als Maß für die Änderung in der Bufferkapazität zu ändern.

2. Datenflusssteuersystem nach Anspruch 1 mit ferner
einer ersten Begrenzungseinrichtung zum Ändern eines Schwellwertes des Buffers basierend auf dem Grad von Kommunikationssteuerdaten, die sich mit der Umgebung des Funknetzwerkes ändern, und zum Begrenzen der Quantität der eingehenden Daten von der externen Vorrichtung (2) bei Erreichen des Schwellwertes des Buffers.

3. Datenflusssteuersystem nach Anspruch 1 mit ferner einer zweiten Änderungseinrichtung zum dynamischen Ändern der Kapazität des Buffers basierend auf dem Grad der Belastung in der Bearbeitung eines Prozessors in der bewegbaren Vorrichtung.

4. Datenflusssteuersystem nach Anspruch 2 mit ferner einer zweiten Begrenzungseinrichtung zum Begrenzen der Quantität der eingehenden Daten von der externen Vorrichtung bei Erreichen des Schwellwertes des Buffers durch Ändern des Schwellwertes des Buffers basierend auf dem Grad der Bearbeitung eines Prozessors in der bewegbaren Vorrichtung (1).

5. Datenflusssteuersystem nach Anspruch 1 mit ferner
einer zweiten Extraktionseinrichtung zum Extrahieren während der Übertragung von der externen Vorrichtung (2) an das Funknetzwerk und zu Beginn eines Programms, das als ein Prozess mit einer Last voreingestellt ist, eines zweiten Gewichtsgrades von einem vorgegebenen Wert basierend auf dem Grad der Belastung in dem Prozess, der durch den Prozessor, der das Programm ausführt, ausgeführt wird, und
einer zweiten Änderungseinrichtung zum dynamischen Ändern der Kapazität des Buffers unter Verwendung des zweiten Gewichtsgrades, der durch die zweite Extraktionseinrichtung extrahiert wurde, als Maß der Änderung der Bufferkapazität.

6. Datenflusssteuersystem nach Anspruch 1 mit ferner:
einer ersten Prüfeinrichtung zum Prüfen, ob die Kapazität des Buffers, die beim Datenempfang von der externen Vorrichtung eingestellt wurde oder bei Datenübertragung an das Funknetzwerk, zur optimalen Bufferkapazität wurde, die auf Grundlage des extrahierten ersten Gewichtsgrades eingestellt wurde, und
einer dritten Änderungseinrichtung zum dynamischen Ändern der Bufferkapazität sofern nicht die erste Prüfeinrichtung entscheidet, dass die Bufferkapazität zur optimalen Bufferkapazität geworden ist.

7. Datenflusssteuersystem nach einem der Ansprüche 1 und 6 mit ferner:
einer zweiten Prüfeinrichtung zum Prüfen beim Datenempfang von der externen Vorrichtung (2) oder bei der Datenübertragung an das Funknetzwerk, ob die restliche Bufferkapazität zu einem vorgegebenen Gefahrenwert wird, auf Grundlage des extrahierten ersten Gewichtsgrades,
einer Stoppeinrichtung zum vorläufigen Anhalten des Dateneingangs mit Bezug auf die externe Vorrichtung (2), wenn die zweite Prüfeinrichtung entscheidet, dass die restliche Bufferkapazität den Gefahrenwert erreicht hat,
einer dritten Prüfeinrichtung zum Überprüfen beim Datenempfang von der externen Vorrichtung oder bei der Datenübertragung an das Funknetzwerk, ob die restliche Bufferkapazität zu einem voreingestellten Sicherheitswert geworden ist, auf Grundlage des extrahierten ersten Gewichtsgrades, und
einer Löseeinrichtung zum Lösen des vorläufigen Halts der eingehenden Daten mit Bezug auf die externe Vorrichtung, wenn die dritte Prüfeinrichtung entscheidet, dass die restliche Bufferkapazität den Sicherheitswert erreicht hat.

8. Datenflusssteuersystem nach Anspruch 5 mit ferner:
einer ersten Prüfeinrichtung zum Prüfen zum Zeitpunkt des Datenempfangs von der externen Vorrichtung (2) oder der Datenübertragung an das Funknetzwerk, ob die Bufferkapazität zu einer voreingestellten optimalen Bufferkapazität geworden ist, auf Grundlage des extrahierten ersten oder zweiten Gewichtsgrades, und
einer dritten Änderungseinrichtung zum dynamischen Ändern der Bufferkapazität sofern nicht die erste Prüfeinrichtung entscheidet, dass die Bufferkapazität zu der optimalen Bufferkapazität geworden ist.

9. Datenflusssteuersystem nach Anspruch 5 mit ferner:
einer zweiten Prüfeinrichtung zum Prüfen beim Datenempfang von der externen Vorrichtung oder der Datenübertragung an das Funknetzwerk, ob die restliche Bufferkapazität einen vorgegebenen Gefahrenwert erreicht hat auf Grundlage des extrahierten ersten und/oder des zweiten Gewichtsgrades,
einer Stoppeinrichtung zum vorläufigen Anhalten der eingehenden Daten mit Bezug auf die externe Vorrichtung (2), wenn die zweite Prüfeinrichtung entscheidet, dass die restliche Bufferkapazität einen Gefahrenwert erreicht hat;
einer dritten Prüfeinrichtung zum Prüfen beim Datenempfang von der externen Vorrichtung (2) oder der Datenübertragung an das Funknetzwerk, ob die restliche Bufferkapazität einen voreingestellten Sicherheitswert erreicht hat auf Grundlage des extrahierten ersten und/oder zweiten Gewichtsgrades, und
einer Löseeinrichtung zum Lösen der eingehenden Daten mit Bezug auf die externe Vorrichtung (2), wenn die dritte Prüfeinrichtung entscheidet, dass die restliche Bufferkapazität den voreingestellten Sicherheitswert erreicht hat.

10. Datenflusssteuersystem nach Anspruch 5, wobei die zweite Änderungseinrichtung aufweist:
eine Einrichtung zum dynamischen Ändern der Bufferkapazität sobald für den zweiten extrahierten Gewichtsgrad herausgefunden wird, dass er in einem Vorzugsmodus ist, und
eine Einrichtung zum Ändern der Bufferkapazität bei dem Datenempfang von der externen Vorrichtung (2) oder der Datenübertragung an das Funknetzwerk, sofern nicht für den zweiten Gewichtsgrad herausgefunden wurde, dass er in dem Vorzugsmodus ist.

11. Datenflusssteuersystem nach einem der Ansprüche 1, 2 und 5, wobei die Kommunikationssteuerdaten zumindest eins von SIR-Daten, BLER-Daten, Übertragungsleistungssteuerdaten, RSCP-Daten, Ec/No-Daten, Übertragungsratendaten und Aktivstationsnummerdaten enthalten.

12. Datenflusssteuersystem nach einem der Ansprüche 3, 4 oder 5, wobei die Verarbeitung des Prozessors eine interne Verarbeitung einschließlich zumindest entweder Tastbetätigung, Lichteinschalten, Melodiewiedergabe und Kamera-/Videobetrieb ist.

13. Datenflusssteuersystem nach einem der Ansprüche 3, 4 und 5, wobei die Verarbeitung des Prozessors eine Funksteuerverarbeitung einschließlich zumindest Zellenauswahlbetrieb und Frequenzübergabe ist.

14. Datenflusssteuersystem nach den Ansprüchen 1 bis 9, wobei der Buffer gemeinsam durch einen Exklusivbufferspeicherraum (15) und einen Speicherraum (13, 14) für andere Zwecke geschaffen ist.

15. Datenflusssteuersystem nach Anspruch 14, wobei der Speicher für andere Zwecke zumindest einer eines Nutzerspeichers (14), der dem Benutzer zugewiesen ist, und ein abnehmbarer externer Speicher (13) ist.

16. Datenflusssteuerverfahren einer bewegbaren Vorrichtung (1), die Daten, die von einer externen Vorrichtung empfangen werden, in einem Buffer speichert, die gespeicherten Daten verarbeitet und die gespeicherten Daten (2) an ein Funknetzwerk überträgt, wobei die bewegbare Vorrichtung ausgebildet ist, eine Kapazitätssteuerung des Buffers auszuführen, mit:
einem Schritt des dynamischen Änderns der Kapazität des Buffers basierend auf dem Grad von Kommunikationssteuerdaten, die sich mit der Umgebung des Funknetzwerkes ändern, und
Überwachen, während der Übertragung von der externen Vorrichtung an das Funknetzwerk, von mehreren individuellen Kommunikationssteuerdaten, die sich mit der Umgebung des Funknetzwerkes ändern, und Überprüfen, ob die Umgebung gut oder schlecht ist, **gekennzeichnet durch**
Extrahieren, bei einer Entscheidung **durch** das Prüfergebnis, dass die Umgebung schlecht ist, eines Umgebungsgewichtsgrades, der den Grad der Schlechtheit der Umgebung angibt, **durch** Aufsummieren von individuellen Gewichtsgraden, die den individuellen Kommunikationssteuerdaten entsprechen, und
dynamisches Ändern der Kapazität des Buffers unter Verwendung des Umgebungsgewichtsgrades und eines Prozessorlastgrades als ein Maß der Änderung der Bufferkapazität.

17. Datenfluss-Steuerverfahren nach Anspruch 16 mit ferner einem Schritt des Begrenzens der Quantität von eingehenden Daten von der externen Vorrichtung (2) bei Erreichen des Schwellwertes des Buffers.

18. Datenfluss-Steuerverfahren nach Anspruch 16 mit ferner einem Schritt des dynamischen Änderns der Kapazität des Buffers basierend auf dem Grad der Last in der Verarbeitung eines Prozessors in der bewegbaren Vorrichtung.

19. Datenfluss-Steuerverfahren nach Anspruch 17 mit ferner einem Schritt des Begrenzens der Quantität der eingehenden Daten von der externen Vorrichtung bei Erreichen des Schwellwertes des Buffers durch Ändern des Schwellwertes des Buffers basierend auf dem Grad der Verarbeitung eines Prozessors in der bewegbaren Vorrichtung.

20. Datenfluss-Steuerverfahren nach Anspruch 16 mit ferner den Schritten:
Extrahieren, während der Übertragung von der externen Vorrichtung an das Funknetzwerk und zu Beginn eines Programms mit einer Last, das in einem Prozess voreingestellt ist, eines zweiten Gewichtsgrades von einem voreingestellten Wert basierend auf dem Grad der Last in dem Prozess, der durch den Prozessor, der das Programm ausführt, ausgeführt wird, und
dynamisches Ändern der Kapazität des Buffers unter Verwendung des zweiten Gewichtsgrades, der in der zweiten Extraktionseinrichtung extrahiert wurde, als ein Maß der Änderung der Bufferkapazität.

21. Datenfluss-Steuerverfahren nach Anspruch 16 mit ferner den Schritten:
Überprüfen, ob die Kapazität des Buffers, die bei dem Datenempfang von der externen Vorrichtung oder bei einer Datenübertragung an das Funknetzwerk eingestellt wurde, zu einer optimalen Bufferkapazität geworden ist, die auf Grundlage des extrahierten ersten Gewichtsgrades eingestellt wurde, und
dynamisches Ändern der Bufferkapazität sofern nicht das erste Prüfergebnis ergibt, dass die Bufferkapazität zur optimalen Bufferkapazität geworden ist.

22. Datenfluss-Steuerverfahren nach einem der Ansprüche 16 und 21 mit ferner den Schritten:
Überprüfen beim Datenempfang von der externen Vorrichtung oder der Datenübertragung an das Funknetzwerk, ob die restliche Bufferkapazität zu einem voreingestellten Gefahrenwert wurde, auf Grundlage des extrahierten ersten Gewichtsgrades,
vorläufiges Anhalten des Dateneingangs mit Bezug auf die externe Vorrichtung, wenn das Prüfergebnis ergibt, dass die restliche Bufferkapazität den Gefahrenwert erreicht hat,
Überprüfen bei dem Datenempfang von der externen Vorrichtung oder der Datenübertragung an das Funknetzwerk, ob die restliche Bufferkapazität zu einem voreingestellten Sicherheitswert geworden ist, auf Grundlage des ersten extrahierten Gewichtsgrades, und
Aufheben des vorläufigen Anhaltens der eingehenden Daten mit Bezug auf die externe Vorrichtung, wenn das Prüfergebnis ergibt, dass die restliche Bufferkapazität den Sicherheitswert erreicht hat.

23. Datenfluss-Steuerverfahren nach Anspruch 20 ferner mit den Schritten:
Überprüfen bei dem Datenempfang von der externen Vorrichtung oder bei der Datenübertragung an das Funknetzwerk, ob die Bufferkapazität zu einer voreingestellten optimalen Bufferkapazität geworden ist auf Grundlage des extrahierten ersten oder zweiten Gewichtsgrades, und
dynamisches Ändern der Bufferkapazität sofern nicht das Prüfergebnis ergibt, dass die Bufferkapazität zu der optimalen Bufferkapazität geworden ist.

24. Datenfluss-Steuerverfahren nach einem der Ansprüche 20 und 23 mit ferner den Schritten:
Überprüfen bei dem Datenempfang von der externen Vorrichtung (2) oder bei einer Datenübertragung and das Funknetzwerk, ob die restliche Bufferkapazität einen voreingestellten Gefahrenwert erreicht hat, auf Grundlage des extrahierten ersten und/oder zweiten Gewichtsgrades,
vorläufiges Anhalten der eingehenden Daten mit Bezug auf die externe Vorrichtung, wenn das Prüfergebnis ergibt, dass die restliche Bufferkapazität einen Gefahrenwert erreicht hat, Überprüfen bei dem Datenempfang von der externen Vorrichtung oder bei der Übertragung an das Funknetzwerk und, wenn das Eingehen von Daten angehalten ist, ob die restliche Bufferkapazität einen voreingestellten Sicherheitswert erreicht hat, auf Grundlage des extrahierten ersten und/oder zweiten Gewichtsgrades, und
Aufheben, wenn das Prüfen ergibt, dass die restliche Bufferkapazität den voreingestellten Sicherheitswert erreicht hat.

25. Datenfluss-Steuerverfahren nach Anspruch 20 mit ferner den Schritten:
dynamisches Ändern, wenn der extrahierte zweite Gewichtsgrad in einem Vorzugsmodus bei Beginn eines Programms ist, der als Prozess mit einer Last in der Übertragung von Daten von der externen Vorrichtung zum Funknetzwerk durchgeführt wird, und
Ändern der Bufferkapazität bei dem Datenempfang von der externen Vorrichtung (2) oder bei der Datenübertragung an das Funknetzwerk, sofern nicht für den extrahierten zweiten Gewichtsgrad herausgefunden wird, dass er in dem Vorzugsmodus ist.

26. Datenfluss-Steuerverfahren nach einem der Ansprüche 16, 17 und 20, wobei die Kommunikationssteuerdaten zumindest entweder SIR-Daten, BLER-Daten, Übertragungsleistungssteuerdaten, RSCP-Daten, Ec/No-Daten, Übertragungsratendaten und Aktivstationsnummerdaten enthalten.

27. Datenfluss-Steuerverfahren nach einem der Ansprüche 19, 20 und 22, wobei die Verarbeitung des Prozessors eine interne Verarbeitung einschließlich von zumindest entweder Tastenbetrieb, Lichteinschalten, Melodiewiedergabe und Kamera- /Videobetrieb ist.

28. Datenfluss-Steuerverfahren nach einem der Ansprüche 18, 19 und 20, wobei die Verarbeitung des Prozessors eine Funksteuerverarbeitung einschließlich von zumindest Zellenauswahlbetrieb und Frequenzübergabe ist.

29. Datenfluss-Steuerverfahren nach einem der Ansprüche 16 bis 25, wobei der Buffer gemeinsam durch einen exklusiven Bufferspeicherraum (15) und einen Speicherraum für andere Zwecke geschaffen wird.

30. Datenfluss-Steuerverfahren nach Anspruch 29, wobei der Speicher für andere Zwecke zumindest entweder ein Benutzerspeicher (14), der dem Nutzer zugewiesen ist, und ein abnehmbarer externer Speicher (13) ist.

31. Datenfluss-Steuerprogramm für eine bewegbare Vorrichtung (1), die Daten, die von einer externen Vorrichtung empfangen werden, in einem Buffer speichert, die gespeicherten Daten verarbeitet und die gespeicherten Daten (2) an ein Funknetzwerk überträgt, wobei das Programm einen Computer veranlasst, zu arbeiten als
eine erste Änderungseinrichtung zum dynamischen Ändern der Kapazität des Buffers basierend auf dem Grad von Kommunikationssteuerdaten, die sich mit der Umgebung des Funknetzwerkes ändern, und
eine Überwachungs-/Prüfeinrichtung (118) zum Überwachen während der Übertragung von der externen Vorrichtung an das Funknetzwerk von mehreren individuellen Kommunikationssteuerdaten, die sich mit der Umgebung des Funknetzwerkes ändern, und zum Überprüfen, ob die Umgebung schlecht oder gut ist, **gekennzeichnet durch**
eine erste Extraktionseinrichtung zum Extrahieren eines Umgebungsgewichtsgrades, der den Grad der Schlechtheit der Umgebung angibt, bei Entscheidung **durch** das Prüfergebnis, dass die Umgebung schlecht ist, **durch** Aufsummieren individueller Gewichtsgrade entsprechend den individuellen Kommunikationssteuerdaten, wobei
die erste Änderungseinrichtung ausgebildet ist, um dynamisch die Kapazität des Buffers **durch** Verwendung des Umgebungsgewichtsgrades und eines Prozessorlastgrades als Maß der Änderung in der Bufferkapazität zu ändern.

32. Datenfluss-Steuerprogramm nach Anspruch 31, das ferner den Computer dazu veranlasst als eine erste Begrenzungseinrichtung zu arbeiten zum Ändern eines Schwellwertes des Buffers basierend auf dem Grad der Kommunikationssteuerdaten, die sich mit der Umgebung des Funknetzwerkes ändern, und zum Begrenzen der Quantität der eingehenden Daten von der externen Vorrichtung (2) bei Erreichen des Schwellwertes des Buffers.

33. Datenfluss-Steuerprogramm nach Anspruch 31 mit den weiteren Merkmalen die einen Computer dazu veranlassen als eine zweite Änderungseinrichtung zu arbeiten zum dynamischen Ändern der Kapazität des Buffers basierend auf dem Grad der Last in der Verarbeitung des Prozessors in der bewegbaren Vorrichtung.

34. Datenfluss-Steuerprogramm nach Anspruch 32 mit den weiteren Merkmalen, die einen Personalcomputer dazu veranlassen, als eine zweite Begrenzungseinrichtung zum Arbeiten zum Begrenzen der Quantität der eingehenden Daten von der externen Vorrichtung bei Erreichen des Schwellwertes des Buffers durch Ändern des Schwellwertes des Buffers basierend auf dem Grad der Verarbeitung eines Prozessors in der bewegbaren Vorrichtung (1).

35. Datenfluss-Steuerprogramm nach Anspruch 31, das ferner den Computer dazu veranlasst zu Arbeiten als:
zweite Extraktionseinrichtung zum Extrahieren während der Übertragung von der externen Vorrichtung (2) an das Radionetzwerk und zu Beginn eines Programms, das als ein Prozess mit einer Last voreingestellt ist, eines zweiten Gewichtsgrades von einem voreingestellten Wert basierend auf dem Grad der Last in dem Prozessor, der durch den Prozessor durchgeführt wird, der das Programm ausführt, und
eine zweite Änderungseinrichtung zum dynamischen Ändern der Kapazität des Buffers unter Verwendung des zweiten Gewichtsgrades, der durch die zweite Extraktionseinrichtung extrahiert wurde, als ein Maß der Änderung der Bufferkapazität.

36. Datenfluss-Steuerprogramm nach Anspruch 31, das ferner den Computer dazu veranlasst zu Arbeiten als:
eine erste Prüfeinrichtung zum Prüfen, ob die Kapazität des Buffers bei dem Datenempfang von der externen Vorrichtung oder der Datenübertragung an das Funknetzwerk, zu einer optimalen Bufferkapazität geworden ist, die auf Grundlage des extrahierten ersten Gewichtsgrades voreingestellt ist, und
eine dritte Änderungseinrichtung zum dynamischen Ändern der Bufferkapazität sofern nicht die erste Prüfeinrichtung entscheidet, dass die Bufferkapazität die optimale Bufferkapazität erreicht.

37. Datenfluss-Steuerprogramm nach einem der Ansprüche 31 und 36, wobei die weiteren Merkmale den Computer dazu veranlassen zu arbeiten als
eine zweite Prüfeinrichtung zum Überprüfen bei dem Datenempfang von der externen Vorrichtung oder der Datenübertragung an das Funknetzwerk, ob die restliche Bufferkapazität einen voreingestellten Gefahrenwert erreicht, auf Grundlage des extrahierten ersten und/oder zweiten Gewichtsgrades,
eine Stoppeinrichtung zum vorläufigen Anhalten des Eingangs von Daten mit Bezug auf die externe Vorrichtung (2), wenn die zweite Prüfeinrichtung entscheidet, dass die restliche Bufferkapazität den Gefahrenwert erreicht hat,
eine dritte Prüfeinrichtung zum Überprüfen bei dem Datenempfang von der externen Vorrichtung oder der Datenübertragung an das Funknetzwerk, ob die Bufferkapazität einen voreingestellten Sicherheitswert erreicht hat, auf Grundlage des extrahierten ersten und/oder zweiten Gewichtsgrades, und
eine Löseeinrichtung zum Aufheben des vorläufigen Anhaltens des Eingangs von Daten, wenn die dritte Prüfeinrichtung entscheidet, dass die restliche Bufferkapazität den voreingestellten Sicherheitswert erreicht hat.

38. Datenfluss-Steuerprogramm nach Anspruch 35, wobei die weiteren Merkmale den Computer dazu veranlassen zu Arbeiten als:
eine erste Prüfeinrichtung zum Prüfen bei dem Datenempfang von der externen Vorrichtung (2) oder der Datenübertragung an das Funknetzwerk, ob die Bufferkapazität eine vorgegebene optimale Bufferkapazität erreicht hat, auf Grundlage des extrahierten ersten oder zweiten Gewichtsgrades, und
eine dritte Änderungseinrichtung zum dynamischen Ändern der Bufferkapazität sofern nicht die erste Prüfeinrichtung entscheidet, dass die Bufferkapazität die optimale Bufferkapazität erreicht hat.

39. Datenfluss-Steuerprogramm nach einem der Ansprüche 35 und 38, wobei die weiteren Merkmale den Computer dazu veranlassen zu Arbeiten als:
eine zweite Prüfeinrichtung zum Prüfen bei dem Empfang von Daten von der externen Vorrichtung oder Datenübertragung an das Funknetzwerk, ob die restliche Bufferkapazität einen vorgegebenen Gefahrenwert erreicht hat, auf der Grundlage des extrahierten ersten und/oder zweiten Gewichtsgrades,
eine Stoppeinrichtung zum vorläufigen Anhalten des Eingehens von Daten mit Bezug auf die externe Vorrichtung (2), wenn die zweite Prüfeinrichtung entscheidet, dass die restliche Bufferkapazität den Gefahrenwert erreicht hat,
eine dritte Prüfeinrichtung zum Überprüfen bei dem Datenempfang von der externen Vorrichtung oder der Datenübertragung an das Funknetzwerk, ob die restliche Bufferkapazität einen voreingestellten Sicherheitswert erreicht hat, auf Grundlage des extrahierten ersten und/oder zweiten Gewichtsgrades, und
eine Aufhebeeinrichtung zum Aufheben des vorläufigen Anhaltens des Dateneingangs, wenn die dritte Prüfeinrichtung entscheidet, dass die restliche Bufferkapazität den voreingestellten Sicherheitswert erreicht hat.

40. Datenfluss-Steuerprogramm nach Anspruch 35, wobei die weiteren Merkmale den Computer dazu veranlassen, zu arbeiten als:
eine Einrichtung zum dynamischen Ändern der Bufferkapazität sobald für den extrahierten zweiten Gewichtsgrad herausgefunden wurde, dass er in einem Vorzugsmodus ist, und ..
eine Einrichtung zum Ändern der Bufferkapazität bei dem Datenempfang von der externen Vorrichtung (2) oder der Datenübertragung an das Funknetzwerk, sofern nicht herausgefunden wird, dass der extrahierte zweite Gewichtsgrad im Vorzugsmodus ist.

41. Datenfluss-Steuerprogramm nach einem der Ansprüche 31, 32 und 35, wobei die Kommunikationssteuerdaten zumindest entweder eins von SIR-Daten, BLER-Daten, Übertragungsleistungssteuerdaten, RSCP-Daten, Ec/No-Daten, Übertragungsratendaten und Aktivstationsnummerdaten enthalten.

42. Datenfluss-Steuerprogramm nach einem der Ansprüche 33, 34 und 35, wobei die Verarbeitung des Prozessors eine interne Verarbeitung ist, einschließlich von zumindest entweder Tastenbetrieb, Lichteinschalten, Melodiewiedergabe und Kamera-/Videobetrieb ist.

43. Datenfluss-Steuerprogramm nach einem der Ansprüche 33, 34 und 35, wobei die Verarbeitung des Prozessors eine Funksteuerverarbeitung einschließlich von zumindest Zellauswahloperation und Frequenzübergabe ist.

44. Datenfluss-Steuerprogramm nach einem der Ansprüche 31 bis 40, wobei der Buffer gemeinsam durch einen exklusiven Bufferspeicherraum (15) und einen Speicherraum (13, 14) für andere Zwecke ist.

45. Datenfluss-Steuerprogramm nach Anspruch 44, wobei der Speicher für andere Zwecke zumindest einer von einem Nutzerspeicher (14), der einem Nutzer zugewiesen ist, und ein abnehmbarer externer Speicher ist.

## Revendications

1. Système de commande de flux de données présentant un module de déplacement (1) pour stocker des données reçues à partir d'un dispositif externe dans une mémoire tampon, traiter les données stockées et transmettre les données stockées (2) à un réseau radio, dans lequel le module de déplacement est apte à exécuter une commande de capacité de la mémoire tampon, lequel comporte:
un premier moyen de modification pour modifier de manière dynamique la capacité de la mémoire tampon sur la base du degré de données de commande de communication changeant avec l'environnement du réseau radio ; et
un moyen de surveillance / vérification (118) pour surveiller, au cours d'une transmission du dispositif externe au réseau radio, de multiples données de commande de communication individuelles changeant avec l'environnement du réseau radio et vérifier si l'environnement est de bonne ou de mauvaise qualité; **caractérisé par**
un premier moyen d'extraction pour extraire, lorsqu'il a été déterminé par le moyen de surveillance / vérification que l'environnement est de mauvaise qualité, un degré de pondération d'environnement représentant le degré de médiocrité de l'environnement en additionnant des degrés de pondération individuels correspondant aux données de commande de communication individuelles ; dans lequel
ledit premier moyen de modification est apte à modifier de manière dynamique la capacité de la mémoire tampon en utilisant le degré de pondération d'environnement et un degré de charge de processeur en tant qu'une mesure de modification dans la capacité de mémoire tampon.

2. Système de commande de flux de données selon la revendication 1, comportant en outre
un premier moyen de limitation pour modifier une valeur seuil de la mémoire tampon sur la base du degré de données de commande de communication changeant avec l'environnement du réseau radio et pour limiter, lorsqu'a été atteinte la valeur seuil de la mémoire tampon, la quantité de données en flux en provenance du dispositif externe (2).

3. Système de commande de flux de données selon la revendication 1, lequel comporte en outre un deuxième moyen de modification pour modifier de manière dynamique la capacité de la mémoire tampon sur la base du degré de charge dans le traitement d'un processeur dans le module de déplacement.

4. Système de commande de flux de données selon la revendication 2, lequel comporte en outre un deuxième moyen de limitation pour limiter, lorsqu'a été atteinte la valeur seuil de la mémoire tampon, la quantité de données en flux en provenance du dispositif externe en modifiant la valeur seuil de la mémoire tampon sur la base du degré de traitement d'un processeur dans le module de déplacement (1).

5. Système de commande de flux de données selon la revendication 1, comportant en outre
un deuxième moyen d'extraction pour extraire, au cours d'une transmission du dispositif externe (2) au réseau radio et au début d'une prédéfinition de programme en tant qu'un processus présentant une charge, un second degré de pondération à partir d'une valeur de prédéfinition sur la base du degré de la charge dans le processus mis en ouvre par le processeur exécutant le programme ; et
un deuxième moyen de modification pour modifier de manière dynamique la capacité de la mémoire tampon en utilisant le second degré de pondération extrait dans le deuxième moyen d'extraction en tant qu'une mesure de modification de la capacité de mémoire tampon.

6. Système de commande de flux de données selon la revendication 1, lequel comporte en outre:
un premier moyen de vérification pour vérifier si la capacité de la mémoire tampon, définie au moment de la réception de données à partir du dispositif externe ou au moment de la transmission de données au réseau radio, est devenue la capacité de mémoire tampon optimale prédéfinie sur la base du premier degré de pondération extrait ; et
un troisième moyen de modification pour modifier de manière dynamique la capacité de mémoire tampon à moins que le premier moyen de vérification détermine que la capacité de mémoire tampon est devenue la capacité de mémoire tampon optimale.

7. Système de commande de flux de données selon l'une quelconque des revendications 1 et 6, lequel comporte en outre :
un deuxième moyen de vérification pour vérifier, au moment de la réception de données à partir du dispositif externe (2) ou au moment de la transmission de données au réseau radio, si la capacité de mémoire tampon résiduelle est devenue une valeur de niveau de dangerosité prédéfinie sur la base du premier degré de pondération extrait ;
un moyen de mise à l'arrêt pour tenter de mettre fin à des données en flux relativement au dispositif externe (2) lorsque le deuxième moyen de vérification détermine que la capacité de mémoire tampon résiduelle a atteint la valeur de niveau de dangerosité ;
un troisième moyen de vérification pour vérifier, au moment de la réception de données à partir du dispositif externe ou au moment de la transmission de données au réseau radio, si la capacité de mémoire tampon résiduelle est devenue une valeur de niveau de sécurité prédéfinie sur la base du premier degré de pondération extrait ; et
un moyen de libération pour mettre fin à la tentative d'arrêt des données en flux relativement au dispositif externe lorsque le troisième moyen de vérification détermine que la capacité de mémoire tampon résiduelle a atteint la valeur de niveau de sécurité.

8. Système de commande de flux de données selon la revendication 5, lequel comporte en outre:
un premier moyen de vérification pour vérifier, au moment de la réception de données à partir du dispositif externe (2) ou au moment de là transmission de données au réseau radio, si la capacité de mémoire tampon est devenue une capacité de mémoire tampon optimale prédéfinie sur la base du premier ou second degré de pondération extrait ; et
un troisième moyen de modification pour modifier de manière dynamique la capacité de mémoire tampon à moins que le premier moyen de vérification détermine que la capacité de mémoire tampon est devenue la capacité de mémoire tampon optimale.

9. Système de commande de flux de données selon la revendication 5, lequel comporte en outre:
un deuxième moyen de vérification pour vérifier, au moment de la réception de données à partir du dispositif externe ou au moment de la transmission de données au réseau radio, si la capacité de mémoire tampon résiduelle a atteint une valeur de niveau de dangerosité prédéfinie sur la base des premier et/ou second degré(s) de pondération extraits ;
un moyen de mise à l'arrêt pour tenter de mettre fin, lorsque le deuxième moyen de vérification détermine que la capacité de mémoire tampon résiduelle a atteint une valeur de niveau de dangerosité, aux données en flux relativement au dispositif externe (2) ;
un troisième moyen de vérification pour vérifier, au moment de la réception de données à partir du dispositif externe (2) ou au moment de la transmission de données au réseau radio, si la capacité de mémoire tampon résiduelle a atteint une valeur de niveau de sécurité prédéfinie sur la base des premier et/ou second degrés dé pondération extraits ; et
un moyen de libération pour mettre fin, lorsque le troisième moyen de vérification détermine que la capacité de mémoire tampon résiduelle a atteint la valeur de niveau de sécurité prédéfinie, aux données en flux relativement au dispositif externe (2).

10. Système de commande de flux de données selon la revendication 5, dans lequel le deuxième moyen de modification inclut :
un moyen pour modifier de manière dynamique la capacité de mémoire tampon dès que le second degré de pondération extrait est déterminé comme étant dans un mode de préférence ; et
un moyen pour modifier, à moins que le second degré de pondération extrait ne soit déterminé comme étant dans le mode de préférence, la capacité de mémoire tampon au moment de la réception de données à partir du dispositif externe (2) ou au moment de la transmission de données au réseau radio.

11. Système de commande de flux de données selon l'une quelconque des revendications 1, 2 et 5, dans lequel les données de commande de communication contiennent au moins l'une des données parmi des données de rapport signal utile / bruit (SIR), des données de taux d'erreurs sur les blocs (BLER), des données de commande de puissance de transmission, des données de puissance de code de signal reçue (RSCP), des données de rapport Ec/No, des données de débit de transmission et des données sur le nombre de stations actives.

12. Système de commande de flux de données selon l'une quelconque des revendications 3, 4 ou 5, dans lequel le traitement du processeur est un traitement interne incluant au moins l'une des opérations parmi une opération de touche, une activation de lumière, une exécution de mélodie et une opération de caméra/vidéo.

13. Système de commande de flux de données selon l'une quelconque des revendications 3, 4 et 5, dans lequel le traitement du processeur est un traitement de commande radio incluant au moins une opération de sélection de cellules et un transfert intercellulaire de fréquence.

14. Système de commande de flux de données selon l'une quelconque des revendications 1 à 9, dans lequel la mémoire tampon est généralement fournie par un espace de mémoire tampon exclusif (15) et un espace mémoire (13, 14) utilisé à d'autres fins.

15. Système de commande de flux de données selon la revendication 14, dans lequel la mémoire utilisée à d'autres fins est au moins l'une parmi une mémoire utilisateur (14) affectée à l'utilisateur et une mémoire externe amovible (13).

16. Procédé de commande de flux de données d'un module de déplacement (1) lequel stocke des données reçues à partir d'un dispositif externe dans une mémoire tampon, traite les données stockées et transmet les données stockées (2) à un réseau radio, dans lequel le module de déplacement est apte à exécuter une commande de capacité de la mémoire tampon, lequel comporte :
une étape consistant à modifier de manière dynamique la capacité de la mémoire tampon sur la base du degré de données de commande de communication changeant avec l'environnement du réseau radio, et
surveiller, au cours d'une transmission du dispositif externe au réseau radio, de multiples données de commande de communication individuelles changeant avec l'environnement du réseau radio et vérifier si l'environnement est de bonne ou de mauvaise qualité; **caractérisé par** les étapes ci-dessous consistant à
extraire, lorsqu'il a été déterminé par le résultat de la vérification que l'environnement est de mauvaise qualité, un degré de pondération d'environnement représentant le degré de médiocrité de l'environnement en additionnant des degrés de pondération individuels correspondant aux données de commande de communication individuelles ; et
modifier de manière dynamique la capacité de la mémoire tampon en utilisant le degré de pondération d'environnement et un degré de charge de processeur en tant qu'une mesure de modification dans la capacité de mémoire tampon.

17. Procédé de commande de flux de données selon la revendication 16, comportant en outre une étape consistant à
limiter, lorsqu'a été atteinte la valeur seuil de la mémoire tampon, la quantité de données en flux en provenance du dispositif externe (2).

18. Procédé de commande de flux de données selon la revendication 16, lequel comporte en outre une étape consistant à modifier de manière dynamique la capacité de la mémoire tampon sur la base du degré de charge dans le traitement d'un processeur dans le module de déplacement.

19. Procédé de commande de flux de données selon la revendication 17, lequel comporte en outre une étape consistant à limiter, lorsqu'a été atteinte la valeur seuil de la mémoire tampon, la quantité de données en flux en provenance du dispositif externe en modifiant la valeur seuil de la mémoire tampon sur la base du degré de traitement d'un processeur dans le module de déplacement.

20. Procédé de commande de flux de données selon la revendication 16, comportant en outre les étapes ci-dessous consistant à :
extraire, au cours d'une transmission du dispositif externe au réseau radio et au début d'une prédéfinition de programme en tant qu'un processus présentant une charge, un second degré de pondération à partir d'une valeur de prédéfinition sur la base du degré de la charge dans le processus mis en oeuvre par le processeur exécutant le programme ; et
modifier de manière dynamique la capacité de la mémoire tampon en utilisant le second degré de pondération extrait dans le deuxième moyen d'extraction en tant qu'une mesure de modification dans la capacité de mémoire tampon.

21. Procédé de commande de flux de données selon la revendication 16, lequel comporte en outre les étapes ci-dessous consistant à :
vérifier si la capacité de la mémoire tampon, définie au moment de la réception de données à partir du dispositif externe ou au moment de la transmission de données au réseau radio, est devenue la capacité de mémoire tampon optimale prédéfinie sur la base du premier degré de pondération extrait ; et
modifier de manière dynamique la capacité de mémoire tampon, à moins que le premier résultat de vérification indique que la capacité de mémoire tampon est devenue la capacité de mémoire tampon optimale.

22. Procédé de commande de flux de données selon l'une quelconque des revendications 16 et 21, lequel comporte en outre les étapes ci-dessous consistant à :
vérifier, au moment de la réception de données à partir du dispositif externe (2) ou au moment de la transmission de données au réseau radio, si la capacité de mémoire tampon résiduelle est devenue une valeur de niveau de dangerosité prédéfinie sur la base du premier degré de pondération extrait ;
tenter de mettre fin à des données en flux relativement au dispositif externe lorsque le résultat de vérification indique que la capacité de mémoire tampon résiduelle a atteint la valeur de niveau de dangerosité ;
vérifier, au moment de la réception de données à partir du dispositif externe ou au moment de la transmission de données au réseau radio, si la capacité de mémoire tampon résiduelle est devenue une valeur de niveau de sécurité prédéfinie sur la base du premier degré de pondération extrait ; et
avorter la tentative d'arrêt des données en flux relativement au dispositif externe lorsque le résultat de vérification indique que la capacité de mémoire tampon résiduelle a atteint la valeur de niveau de sécurité.

23. Procédé de commande de flux de données selon la revendication 20, lequel comporte en outre les étapes ci-dessous consistant à :
vérifier, au moment de la réception de données à partir du dispositif externe ou au moment de la transmission de données au réseau radio, si la capacité de mémoire tampon est devenue une capacité de mémoire tampon optimale prédéfinie sur la base des premier ou second degrés de pondération extraits ; et
modifier de manière dynamique la capacité de mémoire tampon à moins que le résultat de vérification indique que la capacité de mémoire tampon est devenue la capacité de mémoire tampon optimale.

24. Procédé de commande de flux de données selon l'une quelconque des revendications 20 et 23, lequel comporte en outre les étapes ci-dessous consistant à :
vérifier, au moment de la réception de données à partir du dispositif externe (2) ou au moment de la transmission de données au réseau radio, si la capacité de mémoire tampon résiduelle a atteint une valeur de niveau de dangerosité prédéfinie sur la base des premier et/ou second degrés de pondération extraits ;
tenter de mettre fin, lorsque le résultat de vérification indique que la capacité de mémoire tampon résiduelle a atteint une valeur de niveau de dangerosité, aux données en flux relativement au dispositif externe ;
vérifier, au moment de la réception de données à partir du dispositif externe ou au moment de la transmission de données au réseau radio et lorsque les données en flux sont stoppées, si la capacité de mémoire tampon résiduelle a atteint une valeur de niveau de sécurité prédéfinie sur la base des premier et/ou second degrés de pondération extraits ; et
avorter l'opération lorsque le résultat de vérification indique que la capacité de mémoire tampon résiduelle a atteint la valeur de niveau de sécurité prédéfinie.

25. Procédé de commande de flux de données selon la revendication 20, lequel comporte en outre les étapes ci-dessous consistant à :
modifier de manière dynamique, lorsque le second degré de pondération extrait est dans un mode de préférence au démarrage d'un programme défini en tant qu'un processus présentant une charge dans la transmission de données du dispositif externe au réseau radio ; et
modifier, à moins que le second degré de pondération extrait ne soit déterminé comme étant dans le mode de préférence, la capacité de mémoire tampon au moment de la réception de données à partir du dispositif externe (2) ou au moment de la transmission de données au réseau radio.

26. Procédé de commande de flux de données selon l'une quelconque des revendications 16, 17 et 20, dans lequel les données de commande de communication contiennent au moins l'une quelconque parmi des données de rapport signal utile / bruit (SIR), des données de taux d'erreurs sur les blocs (BLER), des données de commande de puissance de transmission, des données de puissance de code de signal reçue (RSCP), des données de rapport Ec/No, des données de débit de transmission et des données sur le nombre de stations actives.

27. Procédé de commande de flux de données selon l'une quelconque des revendications 19, 20 et 22, dans lequel le traitement du processeur est un traitement interne incluant au moins l'une des opérations parmi une opération de touche, une activation de lumière, une exécution de mélodie et une opération de caméra/vidéo.

28. Procédé de commande de flux de données selon l'une quelconque des revendications 18, 19 et 20, dans lequel le traitement du processeur est un traitement de commande radio incluant au moins une opération de sélection de cellules et un transfert intercellulaire de fréquence.

29. Procédé de commande de flux de données selon l'une quelconque des revendications 16 à 25, dans lequel la mémoire tampon est généralement fournie par un espace de mémoire tampon exclusif (15) et un espace mémoire utilisé à d'autres fins.

30. Procédé de commande de flux de données selon la revendication 29, dans lequel la mémoire utilisée à d'autres fins est au moins l'une parmi une mémoire utilisateur (14) affectée à l'utilisateur et une mémoire externe amovible (13).

31. Programme de commande de flux de données d'un module de déplacement (1) lequel stocke des données reçues à partir d'un dispositif externe dans une mémoire tampon, traite les données stockées et transmet les données stockées (2) à un réseau radio, dans lequel le programme amène un ordinateur à opéré en tant que :
un premier moyen de modification pour modifier de manière dynamique la capacité de la mémoire tampon sur la base du degré de données de commande de communication changeant avec l'environnement du réseau radio ; et
un moyen de surveillance / vérification (118) pour surveiller, au cours d'une transmission du dispositif externe au réseau radio, de multiples données de commande de communication individuelles changeant avec l'environnement du réseau radio et vérifier si l'environnement est de bonne ou de mauvaise qualité ; **caractérisé par**
un premier moyen d'extraction pour extraire, lorsqu'il a été déterminé par le résultat de la vérification que l'environnement est de mauvaise qualité, un degré de pondération d'environnement représentant le degré de médiocrité de l'environnement en additionnant des degrés de pondération individuels correspondant aux données de commande de communication individuelles ; dans lequel
ledit premier moyen de modification est apte à modifier de manière dynamique la capacité de la mémoire tampon en utilisant le degré de pondération d'environnement et un degré de charge de processeur en tant qu'une mesure de modification dans la capacité de mémoire tampon.

32. Programme de commande de flux de données selon la revendication 31, lequel amène en outre l'ordinateur à être exploité en tant qu'un premier moyen de limitation pour modifier une valeur seuil de la mémoire tampon sur la base du degré de données de commande de communication changeant avec l'environnement du réseau radio et pour limiter, lorsqu'a été atteinte la valeur seuil de la mémoire tampon, la quantité de données en flux en provenance du dispositif externe (2).

33. Programme de commande de flux de données selon la revendication 31, lequel amène en outre l'ordinateur à être exploité en tant qu'un deuxième moyen de modification pour modifier de manière dynamique la capacité de la mémoire tampon sur la base du degré de charge dans le traitement d'un processeur dans le module de déplacement.

34. Programme de commande de flux de données selon la revendication 32, lequel amène en outre l'ordinateur personnel à être exploité en tant qu'un deuxième moyen de limitation pour limiter, lorsqu'a été atteinte la valeur seuil de la mémoire tampon, la quantité de données en flux en provenance du dispositif externe en modifiant la valeur seuil de la mémoire tampon sur la base du degré de traitement d'un processeur dans le module de déplacement (1).

35. Programme de commande de flux de données selon la revendication 31, lequel amène en outre l'ordinateur à être exploité en tant que :
un deuxième moyen d'extraction pour extraire, au cours d'une transmission du dispositif externe (2) au réseau radio et au début d'une prédéfinition de programme en tant qu'un processus présentant une charge, un second degré de pondération à partir d'une valeur de prédéfinition sur la base du degré de la charge dans le processus mis en oeuvre par le processeur exécutant le programme ; et
un deuxième moyen de modification pour modifier de manière dynamique la capacité de la mémoire tampon en utilisant le second degré de pondération extrait dans le deuxième moyen d'extraction en tant qu'une mesure de modification de la capacité de mémoire tampon.

36. Programme de commande de flux de données selon la revendication 31, lequel amène en outre l'ordinateur à être exploité en tant que :
un premier moyen de vérification pour vérifier si la capacité de la mémoire tampon, au moment de la réception de données à partir du dispositif externe ou au moment de la transmission de données au réseau radio, est devenue la capacité de mémoire tampon optimale prédéfinie sur la base du premier degré de pondération extrait ; et
un troisième moyen de modification pour modifier de manière dynamique la capacité de mémoire tampon à moins que le premier moyen de vérification détermine que la capacité de mémoire tampon est devenue la capacité de mémoire tampon optimale.

37. Programme de commande de flux de données selon l'une quelconque des revendications 31 et 36, lequel amène en outre l'ordinateur à être exploité en tant que :
un deuxième moyen de vérification pour vérifier, au moment de la réception de données à partir du dispositif externe ou au moment de la transmission de données au réseau radio, si la capacité de mémoire tampon résiduelle a atteint une valeur de niveau de dangerosité prédéfinie sur la base des premier et/ou second degrés de pondération extraits ;
un moyen de mise à l'arrêt pour tenter de mettre fin, lorsque le deuxième moyen de vérification détermine que la capacité de mémoire tampon résiduelle a atteint la valeur de niveau de dangerosité, aux données en flux relativement au dispositif externe (2) ;
un troisième moyen de vérification pour vérifier, au moment de la réception de données à partir du dispositif externe ou au moment de la transmission de données au réseau radio, si la capacité de mémoire tampon résiduelle a atteint une valeur de niveau de sécurité prédéfinie sur la base des premier et/ou second degrés de pondération extraits ; et
un moyen de libération pour mettre fin à la tentative d'arrêt des données en flux, lorsque le troisième moyen de vérification détermine que la capacité de mémoire tampon résiduelle a atteint la valeur de niveau de sécurité prédéfinie.

38. Programme de commande de flux de données selon la revendication 35, lequel amène en outre l'ordinateur à être exploité en tant que :
un premier moyen de vérification pour vérifier, au moment de la réception de données à partir du dispositif externe (2) ou au moment de la transmission de données au réseau radio, si la capacité de mémoire tampon est devenue une capacité de mémoire tampon optimale prédéfinie sur la base des premier ou second degrés de pondération extraits ; et
un troisième moyen de modification pour modifier de manière dynamique la capacité de mémoire tampon à moins que le premier moyen de vérification détermine que la capacité de mémoire tampon est devenue la capacité de mémoire tampon optimale.

39. Programme de commande de flux de données selon l'une quelconque des revendications 35 et 38, lequel amène en outre l'ordinateur à être exploité en tant que :
un deuxième moyen de vérification pour vérifier, au moment de la réception de données à partir d'un dispositif externe ou au moment de la transmission de données au réseau radio, si la capacité de mémoire tampon résiduelle a atteint une valeur de niveau de dangerosité prédéfinie sur la base des premier et/ou second degrés de pondération extraits ;
un moyen de mise à l'arrêt pour tenter de mettre fin, lorsque le deuxième moyen de vérification détermine que la capacité de mémoire tampon résiduelle a atteint la valeur de niveau de dangerosité, aux données en flux relativement au dispositif externe (2) ;
un troisième moyen de vérification pour vérifier, au moment de la réception de données à partir du dispositif externe ou au moment de la transmission de données au réseau radio, si la capacité de mémoire tampon résiduelle a atteint une valeur de niveau de sécurité prédéfinie sur la base des premier et/ou second degrés de pondération extraits ; et
un moyen de libération pour mettre fin à la tentative d'arrêt des données en flux, lorsque le troisième moyen de vérification détermine que la capacité de mémoire tampon résiduelle a atteint la valeur de niveau de sécurité prédéfinie.

40. Programme de commande de flux de données selon la revendication 35, lequel amène en outre l'ordinateur à être exploité en tant que :
un moyen pour modifier de manière dynamique la capacité de mémoire tampon dès que le second degré de pondération extrait est déterminé comme étant dans un mode de préférence ; et
un moyen pour modifier, à moins que le second degré de pondération extrait ne soit déterminé comme étant dans le mode de préférence, la capacité de mémoire tampon au moment de la réception de données à partir du dispositif externe (2) ou au moment de la transmission de données au réseau radio.

41. Programme de commande de flux de données selon l'une quelconque des revendications 31, 32 et 35, dans lequel les données de commande de communication contiennent au moins l'une quelconque parmi des données de rapport signal utile / bruit (SIR), des données de taux d'erreurs sur les blocs (BLER), des données de commande de puissance de transmission, des données de puissance de code de signal reçue (RSCP), des données de rapport Ec/No, des données de débit de transmission et des données sur le nombre de stations actives.

42. Programme de commande de flux de données selon l'une quelconque des revendications 33, 34 et 35, dans lequel le traitement du processeur est un traitement interne incluant au moins l'une des opérations parmi une opération de touche, une activation de lumière, une exécution de mélodie et une opération de caméra/vidéo.

43. Programme de commande de flux de données selon l'une quelconque des revendications 33, 34 et 35, dans lequel le traitement du processeur est un traitement de commande radio incluant au moins une opération de sélection de cellules et un transfert intercellulaire de fréquence.

44. Programme de commande de flux de données selon l'une quelconque des revendications 31 à 40, dans lequel la mémoire tampon est généralement fournie par un espace de mémoire tampon exclusif (15) et un espace mémoire (13, 14) utilisé à d'autres fins.

45. Programme de commande de flux de données selon la revendication 44, dans lequel la mémoire utilisée à d'autres fins est au moins l'une parmi une mémoire utilisateur (14) affectée à l'utilisateur et une mémoire externe amovible.
